# EUROPEAN PATENT SPECIFICATION

(11) **EP 4 654 663 B1**
(45) Date of publication and mention of the grant of the patent: **21.10.2026**
(21) Application number: 24213513.5
(22) Date of filing: 18.11.2024
(51) Int. Cl.: H04W 36/00, H04W 36/36, H04W 76/15, H04W 36/30

(54) **METHODS AND SYSTEMS TO PERFORM CONDITIONAL HANDOVER IN DUAL CONNECTIVITY SCENARIOS**
VERFAHREN UND SYSTEME ZUR DURCHFÜHRUNG EINER BEDINGTEN ÜBERGABE IN SZENARIEN MIT DUALER KONNEKTIVITÄT
PROCÉDÉS ET SYSTÈMES POUR EFFECTUER UN TRANSFERT INTERCELLULAIRE CONDITIONNEL DANS DES SCÉNARIOS À DOUBLE CONNECTIVITÉ

(30) Priority: 24.05.2024 IN 202441040628
(43) Date of publication of application: 26.11.2025
(73) Proprietor: Samsung Electronics Co., Ltd., Suwon-si, Gyeonggi-do 16677 (KR)
(72) Inventor: SUNDARARAJU, Sathia Chandrane, 560048 Bengaluru (IN); RAJENDRAN, Deepak, 560048 Bengaluru (IN); MADHURANTAKAM, Shrinath Ramamoorthy, 560048 Bengaluru (IN)
(74) Representative: Marks & Clerk LLP

(56) References cited:
- WO-A1-2024/032436
- WO-A1-2024/072304
- JULIEN MULLER ET AL: "MRO enhancements for LTM and CHO with candidate SCGs", vol. RAN WG3, no. Fukuoka City, Fukuoka, JP; 20240520 - 20240524, 9 May 2024 (2024-05-09), XP052603634, Retrieved from the Internet <URL:https://www.3gpp.org/ftp/TSG_RAN/WG3_Iu/TSGR3_124/Docs/R3-243260.zip R3-243260 - MRO enhancements for LTM and CHO with candidate SCGs.docx> [retrieved on 20240509]
- VIVO: "Discussion on evaluation and execution of CHO with CPAC", vol. 3GPP RAN 2, no. e-Meeting; 20230417 - 20230426, 7 April 2023 (2023-04-07), XP052365079, Retrieved from the Internet <URL:https://ftp.3gpp.org/tsg_ran/WG2_RL2/TSGR2_121bis-e/Docs/R2-2302808.zip R2-2302808_Discussion on evaluation and execution of CHO with CPAC.doc> [retrieved on 20230407]

## Description

### FIELD OF THE DISCLOSURE

The disclosure relates to a wireless communication system, and more specifically, relates to systems and methods to perform conditional handover in dual connectivity scenarios.

### BACKGROUND

In the Third Generation Partnership Project (3GPP) Release 16 as part of new radio (NR) Mobility Enhancements work item, Conditional Handover (CHO) is a feature introduced to improve handover robustness and expected to reduce handover failures at cell edge scenarios. In 3GPP Technical Specification (TS) 38.300 (NR and NG-RAN Overall Description), a CHO is defined as a handover that is executed by a user equipment (UE) when one or more handover execution conditions are met. The UE starts evaluating the execution conditions upon receiving the CHO configuration, and stops evaluating the execution conditions once a handover is executed.

In 3GPP Release 17, Conditional PSCell Change (CPC)/Conditional PSCell Addition (CPA) was added. A CPA is defined as a PSCell addition that is executed by the UE when execution conditions are met. A CPC is defined as a PSCell change that is executed by the UE when execution conditions are met. The UE starts evaluating the execution conditions upon receiving the CPC configuration, and stops evaluating the execution conditions once PSCell change or PCell change is triggered. A PSCell may be a primary secondary cell, that is, a primary cell (SpCell) of a secondary cell group (SCG). A PCell may be a primary cell, specifically, a primary cell (SpCell) of a master cell group (MCG). A master cell group (MCG) may include a primary cell (PCell) and, optionally, one or more secondary cells (SCells). A secondary cell group (SCG) may comprise a primary secondary cell (PSCell) and, optionally, one or more secondary cells (SCells).

Until Release-17, 3GPP did not support the simultaneous configuration and execution of CHO (handover control) and CPA/CPC. The CPA/CPC may be alternately referred to as 'CPAC' (conditional primary secondary cell addition and change) throughout the disclosure. This restriction had an impact on Dual Connectivity (DC) scenarios.

In 3GPP Release 18, the "Further NR Mobility Enhancements" work item addresses the feasibility of configuring CHO and CPA/CPC together in the same conditional reconfiguration message. The following points were concluded during the RAN-2 meeting.
- The CHO execution conditions (for candidate primary cells (PCells)) and CPA/CPC execution conditions (for candidate PSCells) are provided based on the source MeasConfig.
- For CHO with candidate secondary cell group (SCG) for CPA/CPC, the RRCReconfiguration message in one CHO container includes one master cell group (MCG) configuration and one SCG configuration.
- The execution conditions associated with one CHO container include both CHO execution conditions and CPA/CPC execution conditions, i.e., triggering conditions on both a candidate PCell and a candidate PSCell. The triggering conditions of CHO correspond to CHO triggering criteria. Further, the triggering conditions of CPAC correspond to CPAC triggering criteria.
- If there are multiple candidate PSCells associated with one candidate PCell, a network can provide multiple CHO configurations for the same candidate PCell, i.e., each one contains one MCG configuration (for the same candidate PCell) and one SCG configuration (for different candidate PSCell).
- When the CPA/CPC execution condition is met but no CHO execution condition is met, the UE continues to evaluate both CHO and CPA/CPC execution conditions.
- The simultaneous execution of CHO and CPC is performed when both conditions are met.

Accordingly, based on 3GPP Release 18, the network has the capability to configure both the CHO and CPA/CPC details in the same conditional reconfiguration message to the UE. The UE can implement this conditional reconfiguration only when both the CHO and CPA/CPC trigger conditions are met. However, during the waiting period to fulfill both CHO and CPA/CPC trigger criteria, the original purpose of CHO may become obscured, leading to potential radio link failures for the UE due to a decline in the radio link quality of the source cell, and initiating radio resource control (RRC) connection Re-establishment (RRE). As a result of RRE, the UE may experience interruptions in its ongoing services, significantly impacting its performance.

Thus, there lies a need to provide a technique that can solve each of the above-discussed problems.

For example, the prior-art document WO 2024/032436 A1 discloses an information processing method and apparatus so as to optimize CHO and CPAC failures and improve the mobility robustness. The method comprises a terminal receiving CHO configuration sent by a network device and if a failure occurs, the terminal recording first information and reporting the first information to the network device, wherein the first information comprises information related to CHO configuration information.

### SUMMARY

This summary is provided to introduce a selection of aspects in a simplified format that are further described in the detailed description of the disclosure. This summary is not intended to identify key or essential inventive concepts of the disclosure, nor is it intended to determine the scope of the disclosure.

The invention is defined by the appended independent claims. Advantageous embodiments are subject of the dependent claims.

According to an aspect of the disclosure, a method for conditional handover (CHO) in a dual connectivity scenario in a user equipment (UE), includes: receiving a conditional reconfiguration message for simultaneous execution of CHO and conditional primary secondary cell addition and change (CPAC); monitoring an occurrence of a first event that satisfies each of a CHO trigger criteria and a CPAC trigger criteria for the simultaneous execution of the CHO and the CPAC; detecting a second event corresponding to a declaration of at least one of a radio link failure (RLF), a master cell group (MCG) failure, and a secondary cell group (SCG) failure; and prior to the occurrence of the first event and after the detection of the second event, executing the CHO and the CPAC simultaneously, based on at least one of a radio link quality of each of a target MCG and a target SCG and a status of a time-to-trigger (TTT) for each of the target MCG and the target SCG.

According to an aspect of the disclosure, not claimed, a method performed by a user equipment (UE) for conditional handover (CHO) in a dual connectivity, the method includes: receiving, from a network, a plurality of conditional reconfiguration messages for the simultaneous execution of CHO and conditional primary secondary cell addition and change (CPAC), wherein the plurality of conditional reconfiguration messages comprise a plurality of plurality of conditional reconfigurations; detecting an event that a first conditional reconfiguration, among the plurality of conditional reconfigurations, is ready for execution; comparing a first service provided by the first conditional reconfiguration detected in the event with a plurality of services provided by each of the plurality of conditional reconfigurations; determining that a second service provided by at least one of the plurality of conditional reconfigurations is better than the first service provided by the first conditional reconfiguration; waiting for the simultaneous execution of the CHO and the CPAC providing the second service until the radio link quality of a source cell is above the predefined threshold value; prioritizing the simultaneous execution of the CHO and the CPAC providing the second service over the simultaneous execution of the CHO and the CPAC providing the first service, based on the determination that the radio link quality of the source cell is above the predefined threshold value; and executing simultaneously the CHO and the CPAC providing the second service, based on the determination that the the radio link quality of the source cell is above the predefined threshold value.

According to an aspect of the disclosure, not claimed, a method performed by in a dual sim dual standby (DSDS) user equipment (UE) for conditional handover (CHO) in a dual connectivity scenario, includes: receiving, by a first subscriber identity module (SIM), a plurality of conditional reconfiguration messages including a plurality of conditional reconfigurations for the simultaneous execution of CHO and conditional primary secondary cell addition and change (CPAC); detecting an event that a first conditional reconfiguration, among the plurality of conditional reconfigurations for the simultaneous execution of the CHO and the CPAC, is ready for execution; determining whether a second conditional reconfiguration, among the plurality of conditional reconfigurations, provides better band compatibility with a second SIM than the first conditional reconfiguration; waiting for the second conditional reconfiguration until a radio link quality of a source cell is above the predefined threshold value, based on the determination that the second conditional reconfiguration provides the better band compatibility with the second SIM than the first conditional reconfiguration; prioritizing the second conditional reconfiguration over the first conditional reconfiguration, based on the determination that the radio link quality of the source cell is above the predefined threshold value; and executing simultaneously the CHO and the CPAC by the second conditional reconfiguration, based on the determination that the radio link quality of the source cell is above the predefined threshold value.

According to an aspect of the disclosure, a user equipment (UE) for performing conditional handover (CHO) in a dual connectivity scenario, the UE includes: at least one memory storing one or more computer codes; and at least one processor operatively connected to the at least one memory and configured to execute the one or more computer codes to: receive a conditional reconfiguration message for simultaneous execution of CHO and conditional primary secondary cell addition and change (CPAC); monitor an occurrence of a first event that satisfies each of a CHO trigger criteria and a CPAC trigger criteria for the simultaneous execution of CHO and CPAC; detect the second event corresponding to a declaration of at least one of a radio link failure (RLF), a master cell group (MCG) failure, and a secondary cell group (SCG) failure; and prior to the occurrence of the first event and after the detection of the second event, execute the CHO and the CPAC simultaneously, based on at least one of a radio link quality of each of a target MCG and a target SCG, a status of a time-to-trigger (TTT) for each of the target MCG and the target SCG.

According to an aspect of the disclosure, not claimed, a user equipment (UE) for performing conditional handover (CHO) in a dual connectivity scenario, includes: at least one memory storing one or more computer codes; at least one processor operatively connected to the at least one memory and configured to execute the one or more computer codes to: receive, from a network, a plurality of conditional reconfiguration messages for the simultaneous execution of the CHO and conditional primary secondary cell addition and change (CPAC), wherein the plurality of conditional reconfiguration messages comprise a plurality of conditional reconfigurations; detect an event that a first conditional reconfiguration, from the plurality of conditional reconfigurations, is ready for execution; compare a first service provided by the first conditional reconfiguration with a plurality of services provided by each of the plurality of conditional reconfigurations; determine that a second service among the plurality of services is better than the first service provided by the first conditional reconfiguration; wait for the simultaneous execution of the CHO and the CPAC providing the second service until a radio link quality of a source cell is above the predefined threshold value; prioritize the simultaneous execution of the CHO and the CPAC providing the second service over the simultaneous execution of the CHO and the CPAC providing the first service, based on the determination that a radio link quality of a source cell is above a predefined threshold value; and execute simultaneously the CHO and the CPAC providing the second service, based on the determination that the radio link quality of the source cell is above the predefined threshold value.

According to an aspect of the disclosure, not claimed, a dual sim dual standby (DSDS) user equipment (UE) for performing conditional handover (CHO) in a dual connectivity scenario, includes: at least one memory storing one or more computer codes; at least one processor operatively connected to the at least one memory and configured to execute the one or more computer codes to: receive, by a first subscriber identity module (SIM), a plurality of conditional reconfiguration messages including a plurality of conditional reconfigurations for the simultaneous execution of the CHO and conditional primary secondary cell addition and change (CPAC); detect an event that a first conditional reconfiguration, among the plurality of conditional reconfigurations, is ready for execution; determine whether a second conditional reconfiguration, among the plurality of conditional reconfigurations, provides better band compatibility with a second SIM than the first conditional reconfiguration; wait for the second conditional reconfiguration until a radio link quality of a source cell is above the predefined threshold value, based on the determination that the second conditional reconfiguration provides the better band compatibility with the second SIM; prioritize the second conditional reconfiguration over the first conditional reconfiguration, based on the determination that the radio link quality of the source cell is above the predefined threshold value; and execute simultaneously the CHO and the CPAC by the second conditional reconfiguration, based on the determination that the radio link quality of the source cell is above the predefined threshold value.

According to an embodiment, when CHO trigger criteria have not been met, simultaneous CHO and CPAC may be executed in response at least one of a CHO TTT for the target MCG running or a radio link quality for the target MCG being above a threshold. That is, even though the CHO trigger have not been met, the simultaneous CHO and CPAC may be still executed in response to at least one of a CHO TTT for the target MCG running or a radio link quality for the target MCG being above a threshold. For instance, while the CHO trigger criteria have not been met, the CHO trigger criteria may be deemed satisfied in response to at least one of a CHO TTT for the target MCG running or a radio link quality for the target MCG being above a threshold.

According to an embodiment, when CPAC trigger criteria have not been met, simultaneous CHO and CPAC may be executed in response at least one of a CPAC TTT for the target SCG running or a radio link quality for the target SCG being above a threshold. That is, even though the CPAC trigger have not been met, the simultaneous CHO and CPAC may be still executed in response to at least one of a CPAC TTT for the target SCG running or a radio link quality for the target SCG being above a threshold. For instance, while the CPAC trigger criteria have not been met, the CPAC trigger criteria may be deemed satisfied in response to at least one of a CPAC TTT for the target SCG running or a radio link quality for the target SCG being above a threshold.

At least some of the above and other features of the invention are set out in the claims. To further clarify the advantages and features of the disclosure, a more particular description of the disclosure will be rendered by reference to specific embodiments thereof, which are illustrated in the appended drawings. It is appreciated that these drawings depict only typical embodiments of the disclosure and are therefore not to be considered limiting its scope. The disclosure will be described and explained with additional specificity and detail with the accompanying drawings.

### BRIEF DESCRIPTION OF DRAWINGS

These and other features, aspects, and advantages of the disclosure will become better understood when the following detailed description is read with reference to the accompanying drawings in which like characters represent like parts throughout the drawings, wherein:
FIG. 1 illustrates an example environment of a dual connectivity scenario in a wireless communication system, according to some embodiments of the disclosure;
FIG. 2 illustrates a flow chart for operations implemented in the UE for performing conditional handover in a dual connectivity scenario, according to some embodiments of the disclosure;
FIGS 3A, 3B, and 3C illustrate the UE action upon occurrence of scenario 1 and scenario 2, according to some embodiments of the disclosure;
FIG. 4 illustrates the UE action upon occurrence of scenario 3 and scenario 4 according to some embodiments of the disclosure;
FIG. 5 illustrates a flow chart for operations implemented in the UE for performing conditional handover in a dual connectivity scenario in a case when multiple configuration is received, according to some embodiments of the disclosure;
FIG. 6 illustrates example operations for scenario 5, according to some embodiments of the disclosure;
FIG. 7 illustrates operations for performing CHO in a case when the UE is in the DSDS dual connectivity mode, according to some embodiments of the disclosure;
FIG. 8 illustrates further example operations for scenario 6, according to some embodiments of the disclosure; and
FIG. 9 is a diagram illustrating a user equipment (UE) in a wireless network, according to some embodiments of the disclosure.

Further, skilled artisans will appreciate that elements in the drawings are illustrated for simplicity and may not have necessarily been drawn to scale. For example, the flow charts illustrate the operations in terms of the most prominent operations involved to help to improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

### DETAILED DESCRIPTION

It should be understood at the outset that although illustrative implementations of the embodiments of the disclosure are illustrated below, the disclosure may be implemented using any number of techniques, whether currently known or in existence. The disclosure should in no way be limited to the illustrative implementations, drawings, and techniques illustrated below, including the example design and implementation illustrated and described herein.

The term "some" as used herein is defined as "one, or more than one, or all." Accordingly, the terms "one," "more than one," "more than one, but not all" or "all" would all fall under the definition of "some." The term "some embodiments" may refer to one embodiment or to several embodiments or to all embodiments. Accordingly, the term "some embodiments" is defined as meaning "one embodiment, or more than one embodiment, or all embodiments."

More specifically, any terms used herein such as but not limited to "includes," "comprises," "has," "have," and grammatical variants thereof do not specify an exact limitation or restriction and certainly do NOT exclude the possible addition of one or more features or elements, unless otherwise stated, and must not be taken to exclude the possible removal of one or more of the listed features and elements, unless otherwise stated with the limiting language "must comprise" or "needs to include."

Whether or not a certain feature or element was limited to being used only once, either way, it may still be referred to as "one or more features", "one or more elements", "at least one feature", or "at least one element." Furthermore, the use of the terms "one or more", and "at least one" feature or element does not preclude there being none of that feature or element unless otherwise specified by limiting language such as "there needs to be one or more . . ." or "one or more element is required."

Unless otherwise defined, all terms, and especially any technical and/or scientific terms, used herein may be taken to have the same meaning as commonly understood by one having ordinary skill in the art.

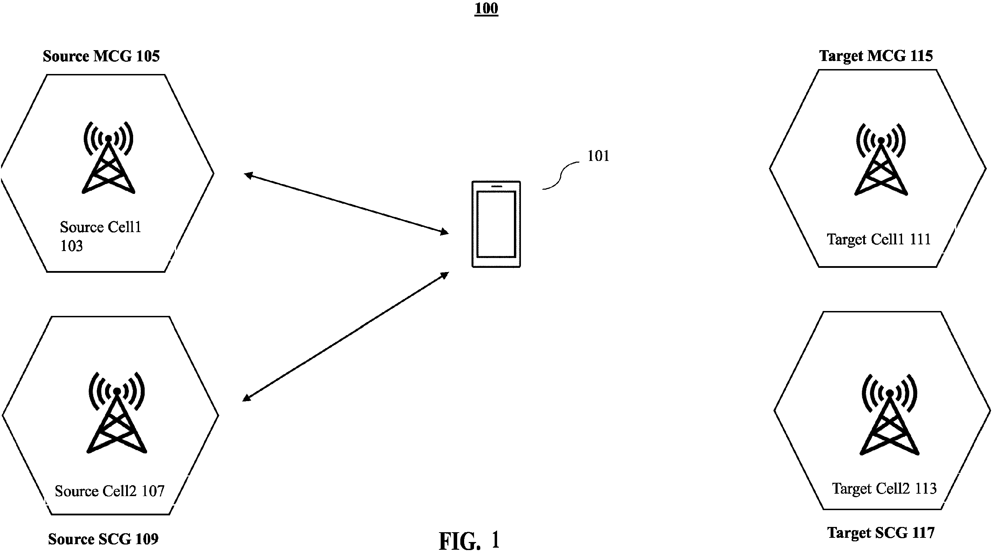

FIGS. 1-9, discussed below, and the various embodiments used to describe the principles of the disclosure are by way of illustration only and should not be construed in any way to limit the scope of the disclosure. Those skilled in the art will understand that the principles of the disclosure may be implemented in any suitably arranged system or device.

Throughout the disclosure, the expression "at least one of a, b, or c" indicates only a, only b, only c, both a and b, both a and c, both b and c, all of a, b, and c, or variations thereof.

Herein, terms to identify access nodes, terms to refer to network entities or NFs, terms to refer to messages, terms to refer to interfaces between network entities, etc., are examples. Accordingly, the disclosure is not limited to the terms as herein used and may use different terms to refer to the items having the same meaning in a technological sense.

The disclosure will hereinafter use terms and definitions defined by the 3GPP long-term evolution (LTE), 5G, and 6G standards. The disclosure is not, however, limited to the terms and definitions, and may equally apply to any systems that conform to other standards.

The disclosure discloses a system and operations implemented in the UE for performing conditional handover in dual connectivity scenarios. According to an embodiment, when both CHO and CPAC execution conditions are not satisfied and a source cell radio link quality becomes worse (e.g. below a threshold), the UE conditionally performs simultaneous execution of CHO and CPAC based on a quality of a source cell and a target cell, thereby avoiding RRE. For instance, simultaneous execution of CHO and CPAC may be performed based on based on at least one of a radio link quality of each of a target MCG and a target SCG and a status of a time-to-trigger, TTT, for each of the target MCG and the target SCG. According to an embodiment, the UE may defer the execution condition satisfied configuration (for example, of Release 18 (Rel-18)) for the simultaneous execution of CHO and CPAC for service priority, service sustenance, and the like. According to some embodiment, the UE may optimize the RRE procedure by using the conditional reconfiguration evaluation information.

FIG. 1 illustrates an example environment of a dual connectivity scenario in a wireless communication system, according to an embodiment. The example environment depicts a dual connectivity scenario 100 having a UE 101 operatively connected with both a master cell group (MCG) 105 and a secondary cell group (SCG) 109. The MCG 105 and the SCG 109 may be alternatively referred to as a source MCG 105 and a source SCG 109 as the UE 101 is initially camped on the MCG 105 and the SCG 109. The MCG 105 is a primary cell group and the SCG 109 is a secondary cell group.

According to an example embodiment, source cell1 103 may be a part of the source MCG 105. Source cell2 107 may be a part of source SCG 109. The dual connectivity scenario allows the UE 101 to connect to two different cells simultaneously. For example, source cell2 107 may operate under a 4G (LTE) network and the source cell1 103 may operate under a 5G (NR) network. Thus, in the dual connectivity scenario, the source cells may be connected with different radio access technologies (RAT) or source cells may be connected with different frequencies of same radio access technology (RAT). The source cell1 103 is connected with the UE 101 for providing major services like data transmission. Further, the source cell2 107 is connected with the UE 101 for providing additional support like ensuring Quality of Service (QoS). In an example scenario, during CHO, the UE may camp upon a target MCG 115 having a target cell1 111 or a target SCG 117 having a target cell2 113 for obtaining various services. In an example embodiment, the source cell1 103, the source cell2 107, the source MCG 105, the source SCG 109, the target MCG 115, the target SCG 117, target cell1 111, target cell2 113 establishes a network. Further, the terms MCG, SCG, and dual connectivity are well-defined, for example, in Release 18. Further, the source cell1 103 and the source cell2 107 may be collectively referred to as 'source cells' throughout the disclosure. Furthermore, the target cell1 111 and the target cell2 113 may be collectively referred to as 'target cells' throughout the disclosure.

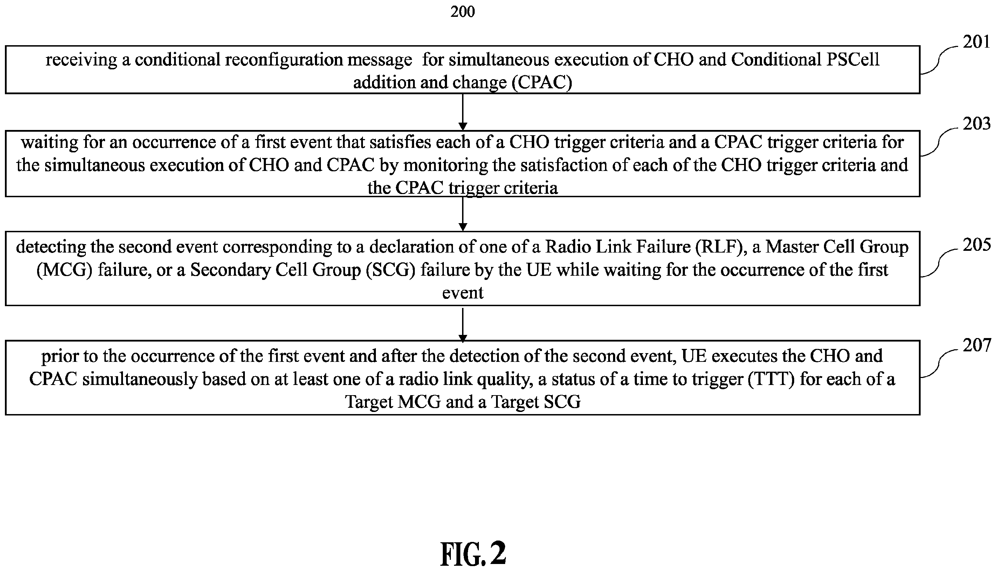

FIG. 2 illustrates a flow chart for operations implemented in the UE for performing conditional handover in a dual connectivity scenario, according to an embodiment of the disclosure. According to an embodiment, the method 200 is implemented in the UE 101. In the example embodiment, the UE 101 is connected with two different radio access technologies, thus operating in the dual connectivity scenario. The operations 200 will be explained by referring to FIG. 1.

For example, according to 3GPP Release 18, the UE 101, for the conditional handover (i.e. simultaneous execution of the CHO and CPAC), waits for the satisfaction of each of the CHO trigger criteria and the CPAC trigger criteria. In order to optimize the CHO, the operations 200 considers events that can occur while the UE 101 is waiting for an occurrence of a first event that satisfies each of the CHO trigger criteria and the CPAC trigger criteria for the simultaneous execution of CHO and CPAC during the monitoring of the satisfaction of each of the CHO trigger criteria and the CPAC trigger criteria. The various events, which may be referred to as 'second events', are as follows.

Scenario 1: Consider that the UE 101 is in an RRC-CONNECTED state, connected to NR network with both the MCG 105 and the SCG 109 active. Further, consider that the UE 101 has received, from the network, a conditional reconfiguration in a conditional reconfiguration message for the simultaneous execution of CHO and CPAC, for example, in accordance with Release 18. However, due to poor radio conditions in a source cell radio condition or any other RRE cause (e.g., an interference, a congestion, or a handover failure), the second events (like a Radio Link Failure (RLF), a MCG failure, or a SCG failure) can be declared.

Scenario 2: Consider that the UE 101 is currently in the RRC-CONNECTED state, connected to NR network, with both the MCG 105 and the SCG 109 active. Further, consider that the UE 101 has received a conditional reconfiguration in a conditional reconfiguration message for the simultaneous execution of CHO and CPAC, for example, in accordance with Release 18. However, due to poor radio conditions in a source cell radio condition or any other RRE cause (e.g., an interference, a congestion, or a handover failure), the second event (such as an RRC re-establishment procedure) is initiated.

Scenario 3: Consider that the UE 101 is currently in the RRC-CONNECTED state, connected to NR network, with both the MCG 105 and the SCG 109 active when UE 101 has dual connectivity with the source cell. Further, consider that the UE 101 has received a conditional reconfiguration in a conditional reconfiguration message for the simultaneous execution of CHO and CPAC, for example, in accordance with Release 18. The second event (such as (Release 16 (Rel-16)) CHO-only configuration (i.e. standalone CHO configuration)) is ready for execution.

Scenario 4: Consider that the UE 101 is currently in the RRC-CONNECTED state, connected to NR network, with only MCG 105 active when UE 101 has no dual connectivity with the source cell 107. Further, consider that the UE 101 has received a conditional reconfiguration in a conditional reconfiguration message for the simultaneous execution of CHO and CPAC, for example, in accordance with Release 18, and the second event such as (Rel-16) CHO-only configuration (i.e. standalone CHO configuration) is ready for execution. A standalone CHO configuration may execute CHO without CPAC.

According to an embodiment, for all the above occurrences of the 'second event,' while the UE 101 is waiting for the event and monitoring for the satisfaction of each of the CHO trigger criteria and the CPAC trigger criteria, the UE 101 performs the following operations.

According to an embodiment, at operation 201, the UE 101 receives the conditional reconfiguration message for the simultaneous execution of CHO and CPAC.

As explained in above paragraphs, at operation 203, the UE 101 waits for the occurrence of the 'first event' that satisfies each of the CHO trigger criteria and the CPAC trigger criteria for the simultaneous execution of CHO and CPAC by monitoring the satisfaction of each of the CHO trigger criteria and the CPAC trigger criteria.

At operation 205, the UE 101 detects the 'second event' corresponding to a declaration of one of the RLF, the MCG failure, or the SCG failure by the UE 101 when waiting for the occurrence of the first event.

At operation 207, prior to the occurrence of the first event and after the detection of the second event, the UE 101 executes the CHO and CPAC simultaneously based on at least one of the radio link quality of the target MCG, the radio link quality of the target SCG 117, a status of a time-to-trigger (TTT) for the target MCG 115 and a status of TTT for the target SCG 117. That is, the UE 101 executes the CHO and CPAC simultaneously based on at least one of a radio link quality of each of a target MCG and a target SCG, and a status of a TTT for each of the target MCG and the target SCG. A time-to-trigger TTT may be a time period during which criteria for an event must be met to trigger a measurement report (e.g. for use in handover). In the context of CHO/CPAC criteria, the TTT for the criteria may represent the time the criteria may need to be met in order for the CHO/CPAC criteria to be considered satisfied (e.g. for the CHO/CPAC to be triggered). While the criteria are met, but before the TTT time period has completed/expired, the TTT status may be TTT running. According to embodiment, the UE 101, as a procedure, continuously monitors the radio link qualities of the target MCG 115 and target SCG 117. The forthcoming paragraphs discuss various embodiments encompassed in operation 207 after the detection of the second event as discussed above.

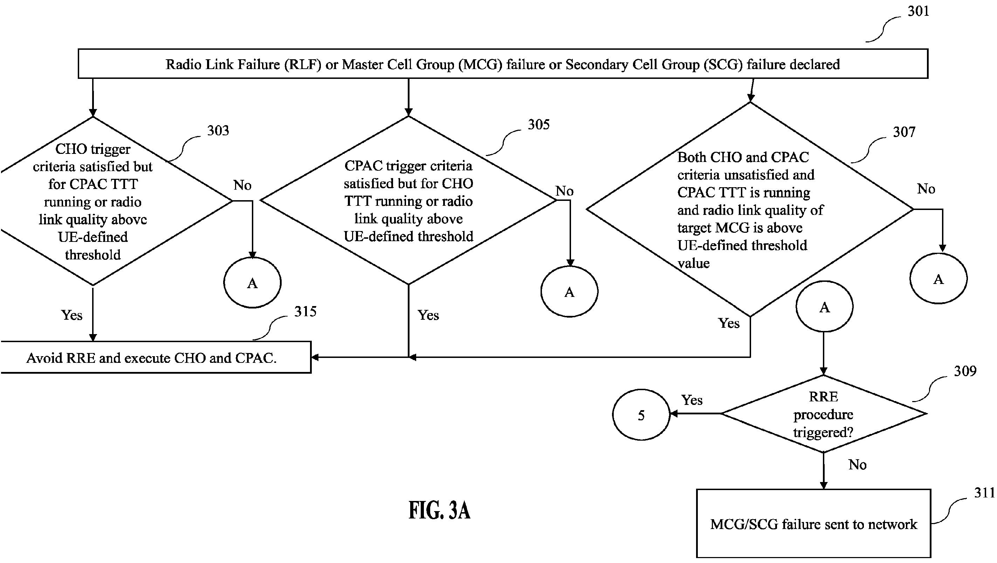

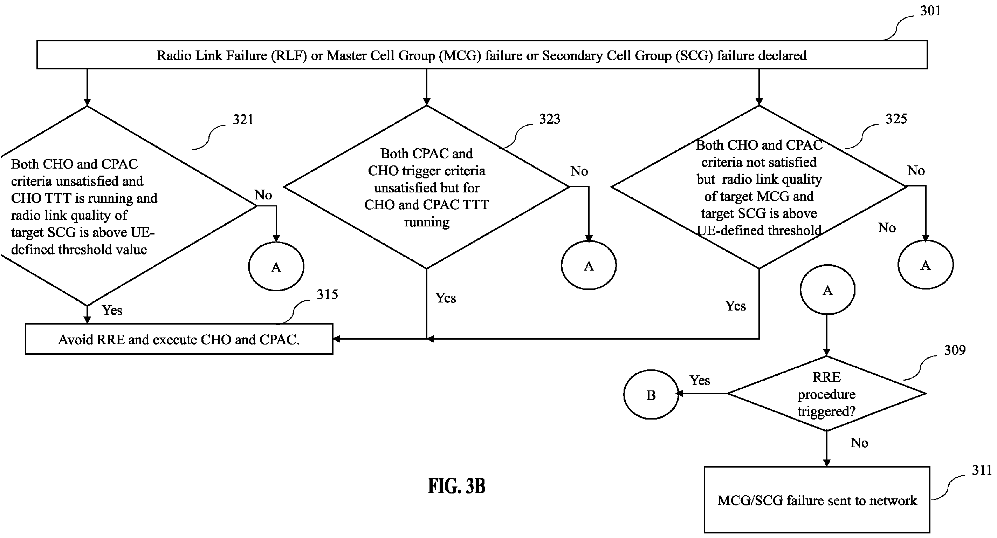

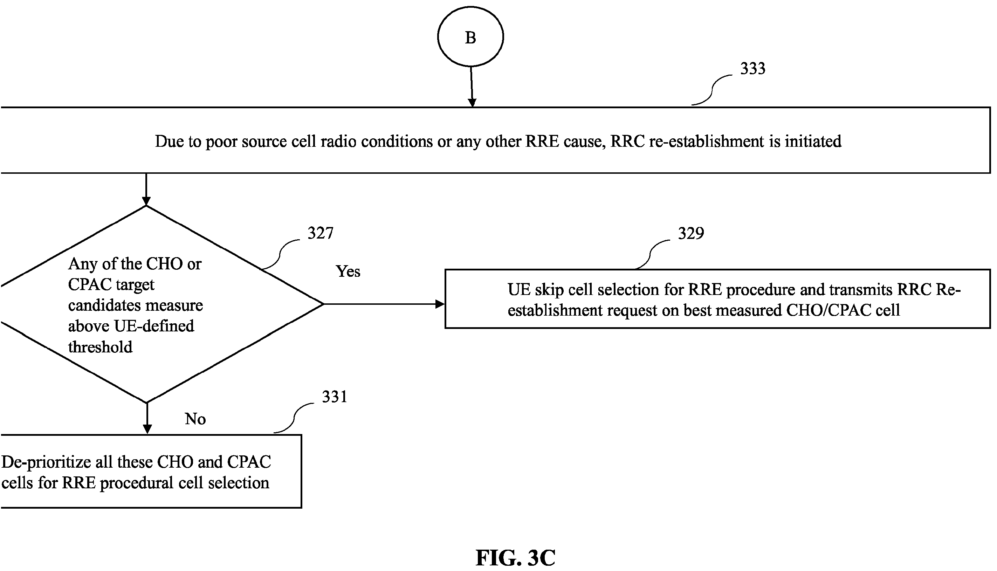

FIGS. 3A, 3B, and 3C illustrate the UE action upon occurrence of scenario 1 and scenario 2, according to an embodiment. The explanations will be made by referring to FIGS. 3A, 3B, and 3C collectively. Further, similar reference numerals are provided for the similar operations.

According to an embodiment, at operation 301, when, the UE 101 detects the second event corresponding to a declaration of one of the RLF, the MCG failure, or the SCG failure by the UE when waiting for the occurrence of the first event, the UE 101 checks the radio link quality of the target MCG 115, the radio link quality of the target SCG 117, the status of the TTT for the target MCG 115 and the status of TTT for the target SCG 117 at operations 303, 305, 307, 321, 323, and 327. In an embodiment, the declaration of one of the RLF, the MCG failure, or the SCG failure occurs in the source MCG 105 and the source SCG 109. Operations 303, 305, 307, 321, 323, and 327 show the detection of various scenarios by the UE, with subsequent operations showing the actions taken by the UE in response to the detection of the respective scenarios.

In an embodiment, at operation 303, the UE 101 determines that CHO trigger criteria are satisfied for the target MCG 115, and for target SCG 117 one of a CPAC TTT is running or the radio link quality of the target SCG 117 is above a predefined threshold value while the UE 101 is waiting for the occurrence of the first event. Based on the determination that the CHO trigger criteria are satisfied for the target MCG 115 and for the target SCG 117 and either of the CPAC TTT is running or the radio link quality of the target SCG 117 is above a predefined threshold value, then the UE 101 executes the CHO, and the CPAC simultaneously at operation 315, which may avoid the RRE. The predefined threshold value may be alternately referred to as UE-defined threshold value throughout the disclosure.

According to an embodiment, at operation 305, the UE 101 determines that CPAC trigger criteria are satisfied for the target SCG 117 and for the target MCG 115 one of a CHO TTT is running or the radio link quality for the target MCG 115 is above a predefined threshold value when the UE 101 is waiting for the occurrence of the first event. Based on the determination that the CPAC trigger criteria are satisfied for the target SCG 117 and for the target MCG 115 either of the CHO TTT is running or the radio link quality of the target MCG 115 is above the predefined threshold value. Then, the UE 101 executes the CHO, and the CPAC simultaneously at operation 315, which may avoid the RRE.

According to an embodiment, at operation 307, the UE 101 determines that both the CPAC trigger criteria and the CHO trigger criteria are unsatisfied but a CPAC TTT is running (e.g. for the target SCG) and a radio link quality of target MCG 115 is above the predefined threshold value, when waiting for the occurrence of the first event. Then based on the determination that the CPAC trigger criteria and the CHO trigger criteria are unsatisfied, the CPAC TTT is running and the radio link quality of target MCG 115 is above a predefined threshold value, the UE 101 executes the CHO and the CPAC simultaneously at operation 315, which may avoid the RRE.

According to an embodiment, at operation 321, the UE 101 determines that both the CPAC trigger criteria and the CHO trigger criteria are unsatisfied, a CHO TTT is running for the target MCG 115 and a radio link quality of target SCG 117 is above the predefined threshold value, when waiting for the occurrence of the first event. Then, based on the determination that the CPAC trigger criteria and the CHO trigger criteria are unsatisfied, the CHO TTT for target MCG 115 is running and the radio link quality of target SCG 117 is above a predefined threshold value, the UE 101 executes the CHO and the CPAC simultaneously at operation 315, which may avoid the RRE.

According to an embodiment, at operation 323, the UE 101 determines that both the CPAC trigger criteria and the CHO trigger criteria are unsatisfied, the CHO TTT for the target MCG 115 and CPAC TTT are running for the target SCG 117 when waiting for the occurrence of the first event. Then, based on the determination of the CPAC trigger criteria and the CHO trigger criteria are unsatisfied and the CHO TTT for the target MCG 115 and the CPAC TTT for the target SCG 117 are running. Then, the UE 101 executes the CHO and the CPAC simultaneously at operation 315, which may avoid the RRE.

According to an embodiment, at operation 325, the UE 101 determines that both the CPAC trigger criteria and the CHO trigger criteria are unsatisfied and the quality of the radio link is above the predefined threshold value for both the target MCG 115 and the target SCG 117, when waiting for the occurrence of the first event. Then, based on the determination that both of the CPAC trigger criteria and the CHO trigger criteria are unsatisfied and the quality of the radio link is above the predefined threshold value for both the target MCG 115 and the target SCG 117, the UE 101 executes the CHO and the CPAC simultaneously at operation 315, which may avoid the RRE.

According to an embodiment, in the case of operations 303, 305, 307, 321, 323, and 325, the result of the determination is 'NO' then the UE 101, at operation 309, determines whether the RRE procedure is triggered (that is, the UE 101 determines whether the second event corresponds to the detection of the initiation of the RRE procedure). That is, in a case the CHO trigger criteria and CPAC trigger criteria are unsatisfied, further, none of the CPAC and CHO timers for the target MCG 115 and target SCG 117 are running and the radio link qualities of both the target MCG 115 and target SCG 117 are below the predefined threshold value, then, operation 309 is executed. Accordingly, at operation 309, the UE 101 determines that the RRE procedure is triggered. The RRE procedure is triggered due to poor source cell radio conditions, or any other RRE cause as depicted in operation 333.

Thus, when the RRE procedure is triggered then the UE 101, at operation 327, determines whether any of the CHO or CPAC target cells measure above the predefined threshold value (e.g. have a radio link quality above the predefined threshold value). If the UE 101 determines that any of the CHO or CPAC target cells measure above the predefined threshold value then, at operation 329, the UE 101 avoids the cell selection for the RRE procedure and transmits the RRC Re-establishment request based on the best measured CHO/CPAC cell.

If, at operation 327, it was not determined that any of the CHO or CPAC target cells measure above the predefined threshold, then, at operation 331, the UE 101 deprioritizes the CHO target cells and the CPAC target cells for the RRE procedure cell selection. The CHO or CPAC target cells may be alternatively referred to as 'target candidate cells.'

Consider an example scenario where the UE 101 is connected to the NR network and has Pcell as Cell-11 and PScell as Cell-21. Further, conditional reconfiguration #1 (Rel-18) is received for the simultaneous trigger of CHO config (configuration) for Cell-12 and CPC config for Cell-22. Further, Conditional reconfiguration #2 (Rel-18) is received for the simultaneous trigger of CHO config for Cell-13 and CPC config for Cell-23. Suppose Cell-13 measures above the UE-defined threshold, then the UE 101 may perform RRE on cell-13 first. Suppose none of the cells (Cell-12, Cell-13, Cell-22, and Cell-23) measured above the UE-defined threshold, then the UE 101 may skip these cells for the immediate cell selection procedure and perform a search on other frequencies/cells.

According to the embodiments described in FIGS. 3A, 3B, and 3C, instead of connection re-establishment, the UE 101 attempts to continue its connection by performing CHO and CPAC on the best available target, if the conditions defined by the UE are met. The UE 101 comprehends CHO and CPAC evaluation information and decides not to measure the same set of cells again. If some CHO and CPAC cells have measured well during the evaluation (in other words, signals measured at some CHO and CPAC cells are strong, e.g., radio link qualities are higher than a threshold level), the UE 101 can simply avoid T311 (a timer in the context of RRE procedure) cell selection and thereby enable faster RRE transmission. If none of the CHO and CPAC cells were detected during the evaluation, it is unlikely these cells can measure well in cell selection for RRE if tried immediately. So de-prioritization of these CHO and CPAC cells may help the UE to select a cell faster during T311.

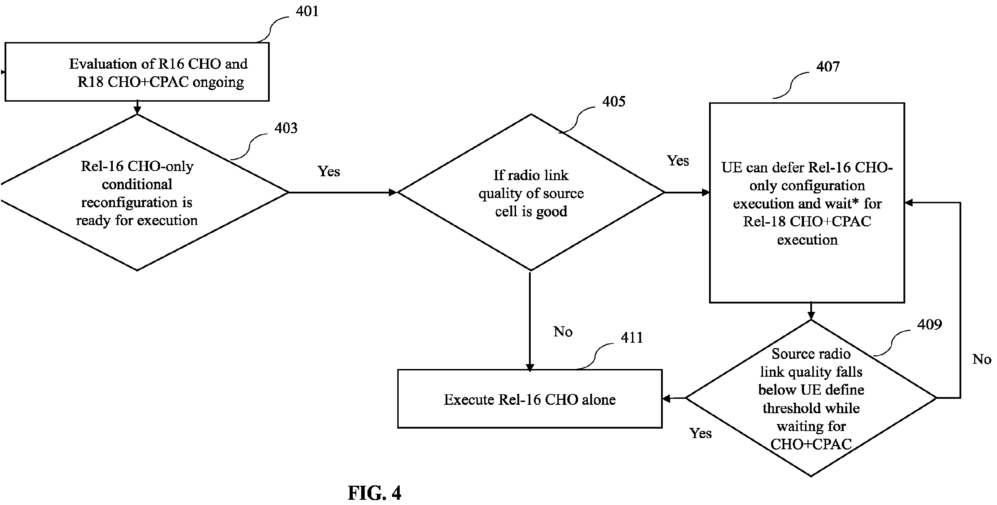

FIG. 4 illustrates the UE action upon occurrence of scenario 3 and scenario 4, according to an embodiment.

According to an embodiment, at operation 401, during the monitoring of the satisfaction of each of the CHO trigger criteria and the CPAC trigger criteria, consider that UE 101 has received conditional reconfigurations for simultaneous execution of CHO and CPAC, for example, as per Release 18 and 3GPP Release 16 (Rel-16) CHO only type (i.e. standalone CHO) as well.

At operation 403, the UE 101 detects the second event corresponding to a conditional reconfiguration for standalone CHO is ready for execution i.e. the CHO trigger criteria are satisfied.

If it is determined at operation 403, the conditional reconfiguration for standalone CHO is ready for execution, at operation 405, the UE 101 determines whether the radio link quality of the source cell is above the predefined threshold value. If so, then the UE 101 moved to operation 407.

At operation 407, the UE 101 waits for the simultaneous execution of CHO and CPAC or until the radio link quality of the source cell is below the predefined threshold value. Thus, the UE 101 defers to perform the standalone CHO despite it being ready for execution. When waiting for simultaneous execution of CHO and CPAC, the system may monitor to determine whether the trigger criteria for simultaneous execution have been satisfied and, if so, perform simultaneous execution of CHO and CPAC. Accordingly, the UE 101 prioritizes the simultaneous execution of CHO and CPAC over the execution of the standalone CHO, based on the determination that the radio link quality of the source cell is above the predefined threshold value. Further, the UE 101 applies conditional reconfiguration for the simultaneous execution of CHO and CPAC based on the prioritization. Further, the UE 101 keeps on monitoring the radio link quality of the source cell with respect to the predefined threshold value.

Thus, at operation 409, the UE 101, when waiting for the simultaneous execution of CHO and CPAC, determines whether the radio link quality of the source cell is below the predefined threshold value.

When the UE 101 determines that the radio link quality of the source cell is below the predefined threshold value, then the UE 101, at operation 411, executes the standalone CHO by applying the conditional reconfiguration for the standalone CHO execution. When the UE 101 determines that the radio link quality of the source cell is not below the predefined threshold value, then the UE 101 returns to operation 407 (e.g. continues waiting for simultaneous execution of CHO and CPAC).

According to some embodiment, the operations depicted in FIG. 4 is also applicable to a case where UE does not have dual connectivity with the source cell.

Consider an example scenario, where the UE 101 is connected to the NR network and has Pcell as Cell-11 and PScell as Cell-21. Further, conditional reconfiguration #1 (Rel-18) is received for the simultaneous trigger of CHO configuration for Cell-12 and CPC configuration for Cell-22. Further, conditional reconfiguration #2 (Rel-16) is received for the CHO-only configuration for Cell-13, and conditional reconfiguration #3 (Rel-16) is received for the CHO-only configuration for Cell-12. Now, both the Cell-11 and the Cell-21 radio link quality is good. Further, trigger conditions are satisfied for either CHO-only configuration, conditional reconfiguration #2, or #3 but the evaluation is ongoing for conditional reconfiguration #1. Thus, the UE 101 can defer execution of Rel-16 CHO-only configuration to avoid losing the SCG leg of data throughput and wait for Rel-18 both simultaneous execution of CHO and CPAC. If there is deterioration in Cell-11 of source MCG 105 or Cell-21 of the source SCG 109, the UE 101 will fall back to Rel-16 CHO-only configuration which is ready for execution.

Consider an example scenario where the UE 101 does not have dual connectivity with the source cell. Further, consider that the UE 101 is connected to the NR network and has source Pcell as Cell-11. Further, consider that conditional reconfiguration #1 (Rel-18) is received for the simultaneous trigger of CHO configuration for Cell-12 and CPC configuration for Cell-22. Further, the conditional reconfiguration #2 (Rel-16) is received for the CHO-only configuration for Cell-13, and conditional reconfiguration #3 (Rel-16) is received for the CHO-only configuration for Cell-12. The Cell-11 radio link quality is good. Furthermore, the trigger conditions are satisfied for either CHO-only, configuration condition reconfig #2 or #3 but the evaluation is ongoing for condition reconfiguration #1. The UE 101 may defer execution of Rel-16 CHO-only configuration to add SCG leg for data throughput and wait for Rel-18 both CHO and CPA/CPC execution. If there is deterioration in source cell-11, the UE 101 will fall to (Rel-16) CHO-only configuration which is ready for execution.

When conditional reconfigurations are available for both dual connectivity (DC) and non-DC, the UE without an active DC configuration may choose to prioritize simultaneous execution of the CHO and CPAC over CHO-only, enabling the addition of the SCG path, resulting in potential improvements in key performance indicators (KPIs) such as throughput. Further, in active DC scenarios, it is undesirable for the UE to lose SCG. Therefore, the UE may decide to de-prioritize (Rel-16) CHO-only type execution, ensuring the continuation of the SCG path and preventing any negative impact on other KPIs.

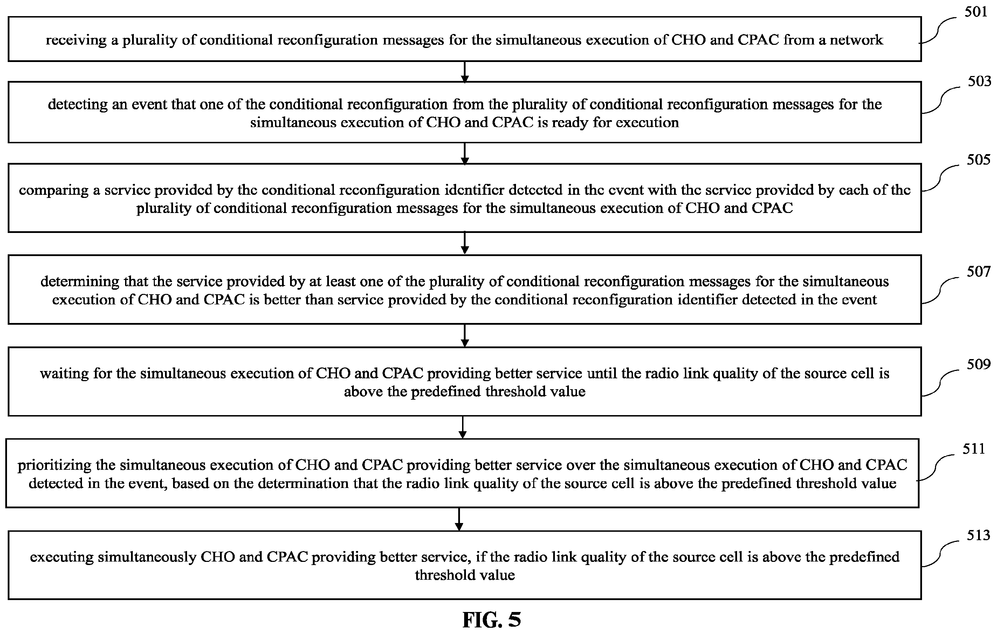

FIG. 5 illustrates a flow chart for operations implemented in the UE 101 for performing CHO in a dual connectivity scenario in a case when multiple configurations are received, according to an embodiment. According to an embodiment, the operations 500 is implemented in the UE 101. In the example embodiment, it is considered that the UE 101 is connected with two different radio access technologies, thus operating in the dual connectivity scenario. The operations 500 will be explained by referring to FIG. 1.

According to an embodiment, the operations 500 consider events that can occur while the UE 101 is waiting for an occurrence of a 'first event' that satisfies each of the CHO trigger criteria and the CPAC trigger criteria for the simultaneous execution of CHO and CPAC during the monitoring of the satisfaction of each of the CHO trigger criteria and the CPAC trigger criteria. The various events which may be referred to as 'second events' are as follows.

Scenario 5: Consider that the UE 101 is currently in the RRC-CONNECTED state, connected to NR network, with both the MCG 105 and the SCG 109 active. Further, consider that the UE 101 as the second event has received multiple conditional reconfigurations in a conditional reconfiguration message for the simultaneous execution of CHO and CPAC, for example, in accordance with Release 18.

According to an embodiment, for all the above occurrences of the second event, while the UE 101 is waiting for the event while monitoring for the satisfaction of each of the CHO trigger criteria and the CPAC trigger criteria, the UE 101 performs the following operations.

According to an embodiment, initially, at operation 501, the UE 101 receives conditional reconfiguration messages having multiple conditional reconfiguration for the simultaneous execution of CHO and CPAC from the network.

At operation 503, the UE 101 detects an event that one of the conditional reconfiguration, from the multiple conditional reconfigurations for the simultaneous execution of CHO and CPAC, is ready for the execution.

At operation 505, the UE 101 compares a service provided by the conditional reconfigurations detected in the event with the services provided by each of the plurality of conditional reconfigurations for the simultaneous execution of CHO and CPAC.

At operation 507, the UE 101 determines that the service provided by at least one of the plurality of conditional reconfiguration for the simultaneous execution of CHO and CPAC is better than the service provided by the conditional reconfiguration detected previously.

At operation 509, the UE 101 waits for the simultaneous execution of CHO and CPAC providing better service until the radio link quality of the source cell is above the predefined threshold value.

Thus, at operation 511, the UE 101 prioritizes the simultaneous execution of CHO and CPAC providing better services later on over the simultaneous execution of CHO and CPAC detected previously, based on the determination that the radio link quality of the source cell is above the predefined threshold value.

At operation 513, the UE 101 executes simultaneously CHO and CPAC providing better service, if the radio link quality of the source cell is above the predefined threshold value. That is, when there are multiple different reconfigurations pending, the UE101 may prioritize the reconfiguration that provides the best service, provided that the radio link quality of the source cell is above the predefined threshold.

Further, when waiting for the simultaneous execution of CHO and CPAC, the UE 101 can determine that the radio link quality of the source cell falls below the predefined threshold value. In response to the radio link quality of the source cell falling below the predefined threshold value, the UE 101 executes the conditional reconfiguration that was ready previously.

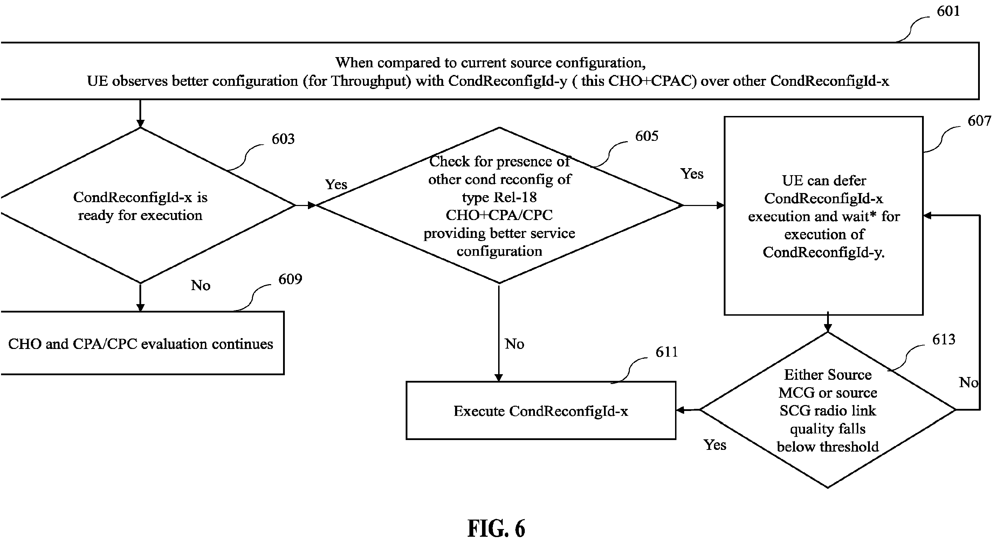

FIG. 6 illustrates example operations 500 for scenario 5.

At operation 601, initially consider that UE 101 receives a first conditional reconfiguration identifier (CondReconfigId-y) and a second conditional reconfiguration identifier (CondReconfigId-x). The conditional reconfiguration identifiers may identify corresponding CHO and/or CPC configurations. Thereafter, UE 101 observes that throughput for CondReconfigId-y is better than the CondReconfigId-x.

At operation 603, the UE 101 determines whether that CondReconfigId-x is ready for execution.

If it is determined that the CondReconfigId-x is ready for execution, then at operation 605, the UE 101 checks the presence of another conditional reconfiguration identifier (for example, of Rel-18 type) that provides better service than CondReconfigId-x.

At operation 603, if the UE 101 determines that CondReconfigId-x is not ready for execution, then, at operation 609, the UE 101 continues to monitor the satisfaction of the CHO and CPAC trigger criteria.

Referring back to operation 605, if the UE 101 finds that there is no other conditional reconfiguration identifier (or message) (for example, of Rel-18 type) service present which provides better service than CondReconfigId-x, then, at operation 611, the UE 101 executes CondReconfigId-x.

A operation 605, if it is determined that there is at least one conditional reconfiguration identifier (for example, of Rel-18 type) (e.g. CondReconfigId-y) present and which provides better service than CondReconfigId-x, then at operation 607, the UE 101 waits for the execution of the CondReconfigId-y provided the radio link quality of the source cell (e.g. the source MCG 105 or the source SCG 109) is above the predefined threshold value. When CondReconfigId-y becomes ready for execution during the waiting, then it may be executed.

At operation 613, the UE 101 determines whether the radio link quality of the source cell is going below the predefined threshold value. That is, the UE 101 determines whether the radio link quality of either the source MCG 105 or the source SCG 109 falls below the predefined threshold. If it is determined, at operation 613, when waiting, that the radio link quality of the source cell (e.g. the source MCG 105 or the source SCG 109) is below the predefined threshold value, then, the UE 101, at operation 611, the UE 101 executes CondReconfigId-x. Thus, the UE 101 may (always) choose the conditional reconfiguration identifier to perform handover which provides better configuration for its services when multiple conditional reconfiguration identifiers are received.

According to an example embodiment, consider that the UE 101 is currently connected to the NR network with Pcell designated as Cell-11 and PScell as Cell-21. The UE 101 has received Conditional reconfiguration #1 (Rel-18) for the simultaneous triggering of CHO configuration for Cell-12 and CPC configuration for Cell-22. Additionally, Conditional reconfiguration #2 (Rel-18) has been received for the simultaneous triggering of CHO configuration for Cell-13 and CPC configuration for Cell-23.

Further, it is considered that Conditional reconfiguration #1 offers a configuration that results in better throughput than Conditional reconfiguration #2. Even though the radio link quality is good for both Cell-11 and Cell-21, the trigger conditions for Conditional reconfiguration #2 have been fulfilled while the evaluation for Conditional reconfiguration #1 is ongoing. In this scenario, the UE 101 has the option to delay the execution of Conditional reconfiguration #2 and await the completion of Conditional reconfiguration #1. However, if there is a decline in the quality of Cell-11 or Cell-21 from the source, the UE 101 will proceed with the execution of Conditional reconfiguration #2.

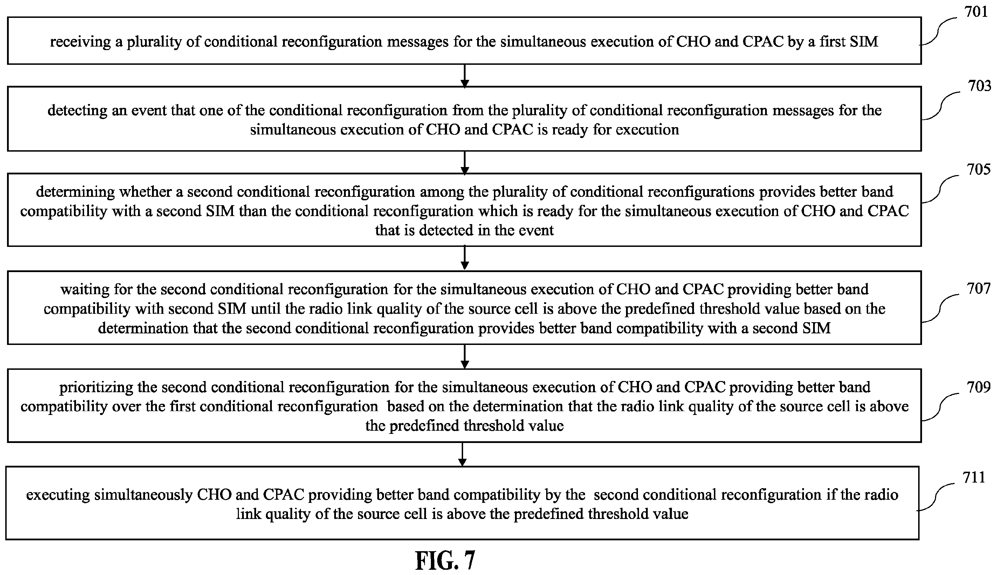

FIG. 7 illustrates operations for performing CHO in a case when the UE is in the DSDS dual connectivity mode. According to an embodiment, the operations 700 is implemented in the UE 101. In an example embodiment, it is considered that the UE is connected with two different radio access technologies, thus operating in the dual connectivity scenario. The operations 700 will be explained by referring to FIG. 1. According to the operations depicted in FIG. 7, UE 101 is in DSDS dual connectivity mode where a stack 1 corresponds to a first subscriber identity module (SIM) and a stack 2 corresponds to a second SIM.

According to an embodiment, the operations 700 consider events that can occur when the UE 101 is waiting for an occurrence of a first event that satisfies each of the CHO trigger criteria and the CPAC trigger criteria for the simultaneous execution of CHO and CPAC during the monitoring of the satisfaction of each of the CHO trigger criteria and the CPAC trigger criteria. The various events which may be referred to as second events are as follows:

Scenario 6: Consider that the UE 101 is a DUAL SIM DUAL STANDBY (DSDS) UE. Accordingly, a Stack-1 of DSDS UE is in the RRC-CONNECTED state connected with NR network. The stack-1 may be connected with different RAT or with different frequencies of same RAT. Further, Stack-1 has both MCG and SCG active, and the second event such as the Stack-1 has received multiple conditional reconfigurations for Rel-18 simultaneous execution of CHO and CPAC.

According to an embodiment, for all the above occurrences of the second event, when the UE 101 is waiting for the event while monitoring for the satisfaction of each of the CHO trigger criteria and the CPAC trigger criteria, the UE 101 performs the following operations.

In an embodiment, initially, at operation 701, the UE 101, receives a plurality of conditional reconfiguration messages including a plurality of conditional reconfigurations for the simultaneous execution of CHO and CPAC by a first SIM.

At operation 703, the UE 101 detects an event that one of the first conditional reconfigurations from the plurality of conditional reconfigurations for the simultaneous execution of CHO and CPAC is ready for execution.

At operation 705, the UE 101 determines whether a second conditional reconfiguration among the plurality of conditional reconfigurations provides better band compatibility with a second SIM than the conditional reconfiguration which is ready for the simultaneous execution of CHO and CPAC that is detected in the event.

At operation 707, based on the determination that the second conditional reconfiguration provides better band compatibility with a second SIM, the UE 101 waits for the second conditional reconfiguration for the simultaneous execution of CHO and CPAC providing better band compatibility with second SIM until the radio link quality of the source cell is above the predefined threshold value.

At operation 709, the UE 101 prioritizes the second conditional reconfiguration for the simultaneous execution of CHO and CPAC providing better band compatibility over the first conditional reconfiguration based on the determination that the radio link quality of the source cell is above the predefined threshold value.

At operation 711, the UE 101 executes simultaneously CHO and CPAC providing better band compatibility by the second conditional reconfiguration if the radio link quality of the source cell is above the predefined threshold value.

In an embodiment, when waiting for the simultaneous execution of CHO and CPAC by the second conditional reconfiguration, the UE 101 further determines whether the radio link quality of the source cell falls below the predefined threshold value. Based on the determination that the radio link quality of the source cell is below the predefined threshold value, the UE 101 executes simultaneously CHO and CPAC provided by the first conditional reconfiguration detected in the event.

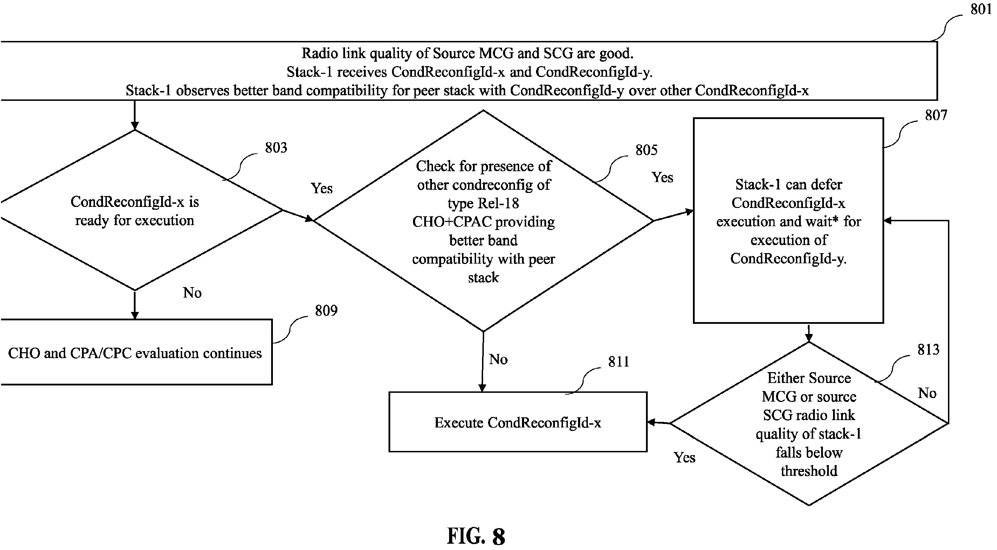

FIG. 8 illustrates further example operations for scenario 6. According to the operations depicted in FIG. 7, it is considered that UE 101 is in DSDS dual connectivity mode where the stack 1 corresponds to the first SIM and the stack 2 corresponds to the second SIM.

According to an example embodiment, at operation 801, consider that radio link quality of the source MCG 105 and SCG 109 are good. Further, consider that Stack-1 receives a first conditional reconfiguration identifier (CondReconfigId-x) and a second conditional reconfiguration identifier (CondReconfigId-y).

At operation 803, the UE 101 determines whether the CondReconfigId-x is ready for execution. If it is determined that CondReconfigId-x is ready for execution, the UE then further determines, at operation 805, checks for the presence of other conditional reconfigurations (condreconfig) (e.g., of type Rel-18) CHO+CPAC providing better band compatibility with peer stack (i.e. stack 2).

At operation 805, if the UE 101 determines that other condreconfig of type Rel-18 CHO+CPAC (e.g. CondReconfigId-y) provide better band compatibility with peer stack, then UE 101 defers CondReconfigId-x execution and waits for execution of CondReconfigId-y.

In an embodiment, at operation 803, if the UE 101 determines the CondReconfigId-x is not ready for execution, then the UE 101 continue evaluation of CHO and CPA/CPC criteria.

At operation 805, if the UE 101 determines the other condreconfig of type Rel-18 CHO+CPAC does not provide better band compatibility with peer stack, then at operation 811, the UE 101 execute CondReconfigId-x.

At operation 807, the UE 101 continues to wait for the execution of the CondReconfigId-y provided that either the source MCG or the source SCG radio link quality of stack-1 is above the threshold value. If either the source MCG or source SCG radio link quality of stack-1 falls below the threshold value, then the UE101 may execute CondReconfigId-x (operation 811).

According to example operations 800, consider that Stack-1 of the UE 101 is currently linked to the NR network, with Pcell designated as Cell-11 and PScell as Cell-21. Further, the UE 101 has received Conditional reconfiguration #1 (e.g., Rel-18) for the simultaneous triggering of CHO configuration for Cell-12 and CPC configuration for Cell-22. Additionally, Conditional reconfiguration #2 (Rel-18) has been received for the simultaneous triggering of CHO configuration for Cell-13 and CPC configuration for Cell-23.

In some embodiments, conditional reconfiguration #1 provides better band compatibility with the peer stack (Stack-2). Even though the radio link quality is good for both Cell-11 and Cell-21, the trigger conditions for Conditional reconfiguration #2 have been met while the assessment for Conditional reconfiguration #1 is still ongoing. In this scenario, Stack-1 has the option to delay the execution of Conditional reconfiguration #2 and await the completion of Conditional reconfiguration #1. However, if there is a decline in the quality of Cell-11 or Cell-21 of the source, Stack-1 will proceed with the execution of Conditional reconfiguration #2. Thus, the UE 101 takes into account DSDS and gives priority to the conditional reconfiguration that offers the best performance.

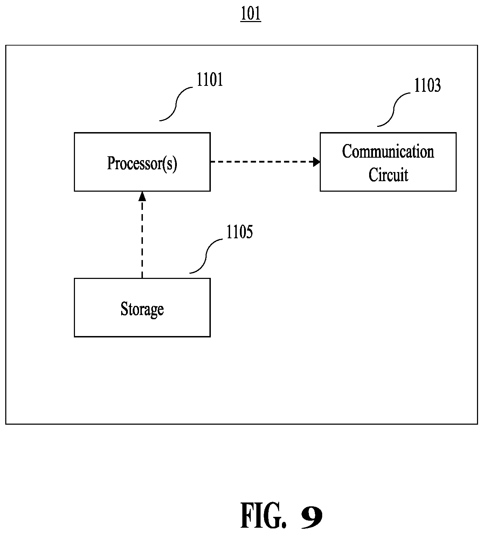

FIG. 9 illustrates the UE 101 in a wireless network, according to an embodiment of the disclosure. The UE 101 may include at least one processor ("processor(s)") 1101, a communication circuit 1103 (e.g., communicator or communication interface), and a storage 1105. The UE 101 may correspond to a cellular phone or other device that communicates over a plurality of cellular networks (such as a 3G, 4G, 5G, or pre-5G, 6G network or any future wireless communication network). The communication circuit 1103 may perform functions for transmitting and receiving signals via a wireless channel.

As an example, the processor(s) 1101 may be a single processing unit or a number of units, all of which could include multiple computing units. The processor(s) 1101 may be implemented as one or more microprocessors, microcomputers, microcontrollers, digital signal processors, central processing units, state machines, logic circuitries, and/or any devices that manipulate signals based on operational instructions. Among other capabilities, the processor(s) 1101 is configured to fetch and execute computer-readable instructions and data stored in the memory. The processor(s) 1101 may include one or a plurality of processors. The processor(s) 1101 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The processor(s) 1101 may control the processing of the input data in accordance with a predefined operating rule or artificial intelligence (AI) model stored in the non-volatile memory and the volatile memory, i.e., the storage 1105. The predefined operating rule or artificial intelligence model is provided through training or learning.

The storage (or memory) 1105 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

In a firmware or software configuration, the operations and the communication according to the embodiments of the disclosure may be implemented in the form of modules, procedures, functions, etc. performing the above-described functions or operations. Instructions may be stored in the storage 1105 (or the memory) and executed by the processors 1101. The storage 1105 (or the memory) may be located at the interior or exterior of the processors 1101 and may transmit and receive data to and from the processors 1101 via various known means.

According to the embodiments of the disclosure, the CHO is efficiently performed instead of connection re-establishment. The disclosed technique performs CHO over the best available target cell.

The one or more embodiments described above are provided by way of illustration only and should not be construed to limit the scope of the disclosure. Various modifications and changes may be made to the principles described herein without following the example embodiments and applications illustrated and described herein, and without departing from the scope of the disclosure.

Those skilled in the art will appreciate that the operations described herein in the disclosure may be carried out in other specific ways than those set forth herein without departing from essential characteristics of the disclosure. The above-described embodiments are therefore to be construed in all aspects as illustrative and not restrictive. The scope of the disclosure should be determined by the appended claims, not by the above description, and all changes coming within the meaning of the appended claims are intended to be embraced therein.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. Numerous variations, whether explicitly given in the specification or not, such as differences in structure, dimension, and use of material, are possible.

## Claims

1. A method for conditional handover, CHO, in a dual connectivity scenario in a user equipment, UE (101), the method (200) comprising:
receiving a conditional reconfiguration message for simultaneous execution of CHO and conditional primary secondary cell addition and change, CPAC (201);
monitoring an occurrence of a first event that satisfies each of a CHO trigger criteria and a CPAC trigger criteria for the simultaneous execution of the CHO and the CPAC (203);
detecting a second event corresponding to a declaration of at least one of a radio link failure, RLF, a master cell group, MCG, failure, and a secondary cell group, SCG, failure (205); and
prior to the occurrence of the first event and after the detection of the second event, executing the CHO and the CPAC simultaneously, based on at least one of a radio link quality of each of a target MCG and a target SCG and a status of a time-to-trigger, TTT, for each of the target MCG and the target SCG (207).

2. The method of claim 1, further comprising:
determining that the CHO trigger criteria for the target MCG is satisfied;
determining, for the target SCG, at least one of:
that a CPAC TTT runs, and
that a quality of the radio link of the target SCG is above a predefined threshold value; and
when waiting for the occurrence of the first event, executing the CHO and the CPAC simultaneously, based on the determination that the CHO trigger criteria for the target MCG is satisfied and based on the determination of the at least one of:
that the CPAC TTT of the target SCG runs, and
that the quality of the radio link of the target SCG is above the predefined threshold value.

3. The method of claim 1, further comprising:
determining that CPAC trigger criteria for the target SCG is satisfied;
determining, for the target MCG, at least one of:
that a CHO TTT runs for the target MCG, and
that a quality of the radio link for the target MCG is above a predefined threshold value; and
when waiting for the occurrence of the first event, executing the CHO and the CPAC simultaneously, based on the determination that the CPAC trigger criteria is satisfied for the target SCG and based on the determination of at least one of:
that the CHO TTT runs for target MCG, and
that the quality of the radio link for the target MCG is above the predefined threshold value.

4. The method of claim 1, further comprising:
determining that both the CPAC trigger criteria and the CHO trigger criteria are unsatisfied;
determining that a CPAC TTT runs for the target SCG and a radio link quality of the target MCG is above the predefined threshold value, and
when waiting for the occurrence of the first event, executing the CHO and the CPAC simultaneously, based on the determination of the CPAC trigger criteria and the CHO trigger criteria are unsatisfied and based on the determination that the CPAC TTT runs for target SCG, and the radio link quality of the target MCG is above the predefined threshold value.

5. The method of claim 1, further comprising:
determining that both the CPAC trigger criteria and the CHO trigger criteria are unsatisfied;
determining that a CHO TTT runs for the target MCG and a radio link quality of the target SCG is above the predefined threshold value; and
when waiting for the occurrence of the first event, executing the CHO and the CPAC simultaneously, based on the determination of the CPAC trigger criteria and the CHO trigger criteria are unsatisfied and based on the determination that the CHO TTT runs for the target MCG and the radio link quality of the target SCG is above the predefined threshold value.

6. The method of claim 1, further comprising:
determining that both the CPAC trigger criteria and the CHO trigger criteria are unsatisfied;
determining that a CHO TTT runs for the target MCG and the CPAC TTT runs for the target SCG; and
when waiting for the occurrence of the first event, executing the CHO and the CPAC simultaneously, based on the determination of the CPAC trigger criteria and the CHO trigger criteria are unsatisfied and based on the determination that the CHO TTT runs for the target MCG and the CPAC TTT runs for the target SCG.

7. The method of claim 1, further comprising:
determining that both the CPAC trigger criteria and the CHO trigger criteria are unsatisfied;
determining that a quality of the radio link is above the predefined threshold value for both the target MCG and the target SCG; and
when waiting for the occurrence of the first event, executing the CHO and the CPAC simultaneously, based on the determination of the CPAC trigger criteria and the CHO trigger criteria is unsatisfied and based on the determination that the quality of the radio link is above the predefined threshold value for both the target MCG and the target SCG.

8. The method of claim 1, wherein the method further comprises, based on the determination that both the CPAC trigger criteria and the CHO trigger criteria are not satisfied:
determining a triggering of a radio reestablishment, RRE, procedure;
determining a radio link quality of at least one CHO candidate cell from a plurality of CHO candidate cells or at least one CPAC candidate cell from a plurality of CPAC candidate cells is above the predefined threshold value;
avoiding a cell selection for RRE procedure; and
based on a determination that the radio link quality is above the predefined threshold value, transmitting a radio resource control, RRC, re-establishment request to the at least one CHO candidate cell or the at least one CPAC candidate cell.

9. The method of claim 8, wherein based on the determination that a radio link quality of none of the plurality of the CHO candidate cells and none of the plurality of CPAC candidate cells is above the predefined threshold value, the method further comprises deprioritizing the plurality of the CHO candidate cells and the plurality of CPAC candidate cells for the cell selection for the RRE procedure.

10. The method of any preceding claim, further comprising;
detecting the second event that a conditional reconfiguration for standalone CHO execution is received and a standalone CHO trigger criteria is satisfied;
determining whether a radio link quality of a source cell is above a predefined threshold value;
waiting for the simultaneous execution of the CHO and the CPAC until the radio link quality of the source cell is above the predefined threshold value;
prioritizing the simultaneous execution of the CHO and the CPAC over the execution of the standalone CHO, based on the determination that the radio link quality of the source cell is above the predefined threshold value; and
applying the conditional reconfiguration for the simultaneous execution of the CHO and the CPAC based on the prioritization.

11. The method of claim 10, further comprising:
when waiting for the simultaneous execution of the CHO and the CPAC, determining that the radio link quality of the source cell is below the predefined threshold value; and
executing the standalone CHO by applying the conditional reconfiguration for standalone CHO execution.

12. A user equipment, UE (101), for performing conditional handover, CHO, in a dual connectivity scenario, the UE (101) comprising:
at least one memory (1105) storing one or more computer codes; and
at least one processor (1101) operatively connected to the at least one memory (1105) and configured to execute the one or more computer codes to:
receive a conditional reconfiguration message for simultaneous execution of CHO and conditional primary secondary cell addition and change, CPAC (201);
monitor an occurrence of a first event that satisfies each of a CHO trigger criteria and a CPAC trigger criteria for the simultaneous execution of CHO and CPAC (203);
detect the second event corresponding to a declaration of at least one of a radio link failure, RLF, a master cell group, MCG, failure, and a secondary cell group, SCG, failure (205); and
prior to the occurrence of the first event and after the detection of the second event, execute the CHO and the CPAC simultaneously, based on at least one of a radio link quality of each of a target MCG and a target SCG, a status of a time-to-trigger, TTT, for each of the target MCG and the target SCG (207).

13. The UE of claim 12, wherein the at least one processor is further configured to execute the one or more computer codes to:
determine that the CHO trigger criteria for the target MCG is satisfied;
determine for the target SCG, at least one of:
that a CPAC TTT runs, and
that a quality of the radio link of the target SCG is above a predefined threshold value; and
when waiting for the occurrence of the first event, execute the CHO and the CPAC simultaneously, based on the determination that the CHO trigger criteria for the target MCG is satisfied and based on the determination of the at least one of:
that the CPAC TTT of the target SCG runs, and
that the quality of the radio link of the target SCG is above the predefined threshold value.

14. The UE of claim 12, wherein the at least one processor is further configured to execute the one or more computer codes to:
determine that CPAC trigger criteria for the target SCG is satisfied;
determine, for the target MCG, at least one of:
that a CHO TTT runs for the target MCG, and
that a quality of the radio link for the target MCG is above a predefined threshold value; and
when waiting for the occurrence of the first event, execute the CHO and the CPAC simultaneously, based on the determination that the CPAC trigger criteria is satisfied for the target SCG and based on the determination of at least one of:
that the CHO TTT runs for target MCG, and
that the quality of the radio link for the target MCG is above the predefined threshold value.

15. The UE of claim 12, wherein the at least one processor is further configured to execute the one or more computer codes to:
determine that both the CPAC trigger criteria and the CHO trigger criteria are unsatisfied;
determine that a CPAC TTT runs for the target SCG and a radio link quality of the target MCG is above the predefined threshold value, and
when waiting for the occurrence of the first event, execute the CHO and the CPAC simultaneously, based on the determination of the CPAC trigger criteria and the CHO trigger criteria are unsatisfied and based on the determination that the CPAC TTT runs for target SCG, and the radio link quality of the target MCG is above the predefined threshold value.

## Patentansprüche

1. Verfahren für die bedingte Verbindungsübergabe, CHO, in einem Szenario mit zweifacher Konnektivität in einem Benutzerendgerät, UE (101), wobei das Verfahren (200) umfasst:
Empfangen einer Nachricht zur bedingten Neukonfigurierung für die gleichzeitige Ausführung von CHO und bedingter Hinzufügung und Änderung von Primär- und Sekundärzellen, CPAC, (201);
Überwachen des Auftretens eines ersten Ereignisses, das jedes von einem CHO-Auslösekriterium und einem CPAC-Auslösekriterium erfüllt, für die gleichzeitige Ausführung von CHO und CPAC (203);
Ermitteln eines zweiten Ereignisses, das einer Deklaration von mindestens einem von Folgendem entspricht: Funkverbindungsausfall, RLF, Ausfall der Master-Zellengruppe, MCG, und Ausfall der sekundären Zellengruppe, SCG, (205); und
vor dem Auftreten des ersten Ereignisses und nach der Ermittlung des zweiten Ereignisses: gleichzeitiges Ausführen von CHO und CPAC auf der Grundlage von mindestens einem von Folgendem: eine Funkverbindungsqualität von jeder einer Ziel-MCG und einer Ziel-SCG und ein Status einer Auslösezeit, TTT, für jede der Ziel-MCG und der Ziel-SCG (207).

2. Verfahren nach Anspruch 1, ferner umfassend:
Bestimmen, dass das CHO-Auslösekriterium für die Ziel-MCG erfüllt ist;
Bestimmen, für die Ziel-SCG, von mindestens einem von Folgendem:
dass eine CPAC-TTT läuft, und
dass eine Qualität der Funkverbindung der Ziel-SCG über einem vordefinierten Schwellenwert liegt; und
beim Warten auf das Eintreten des ersten Ereignisses: gleichzeitiges Ausführen von CHO und CPAC auf der Grundlage der Bestimmung, dass das CHO-Auslösekriterium für die Ziel-MCG erfüllt ist, sowie auf der Grundlage der Bestimmung des mindestens einen von Folgendem:
dass die CPAC-TTT der Ziel-SCG läuft, und
dass die Qualität der Funkverbindung der Ziel-SCG über dem vordefinierten Schwellenwert liegt.

3. Verfahren nach Anspruch 1, ferner umfassend:
Bestimmen, dass das CPAC-Auslösekriterium für die Ziel-SCG erfüllt ist;
Bestimmen, für die Ziel-MCG, von mindestens einem von Folgendem:
dass eine CHO-TTT für die Ziel-MCG läuft, und
dass eine Qualität der Funkverbindung für die Ziel-MCG über einem vordefinierten Schwellenwert liegt; und
beim Warten auf das Eintreten des ersten Ereignisses: gleichzeitiges Ausführen von CHO und CPAC auf der Grundlage der Bestimmung, dass das CPAC-Auslösekriterium für die Ziel-SCG erfüllt ist, sowie auf der Grundlage der Bestimmung von mindestens einem von Folgendem:
dass die CHO-TTT für die Ziel-MCG läuft, und
dass die Qualität der Funkverbindung für die Ziel-MCG über dem vordefinierten Schwellenwert liegt.

4. Verfahren nach Anspruch 1, ferner umfassend:
Bestimmen, dass sowohl das CPAC-Auslösekriterium als auch das CHO-Auslösekriterium nicht erfüllt ist;
Bestimmen, dass eine CPAC-TTT für die Ziel-SCG läuft und eine Funkverbindungsqualität der Ziel-MCG über dem vordefinierten Schwellenwert liegt, und
beim Warten auf das Eintreten des ersten Ereignisses: gleichzeitiges Ausführen von CHO und CPAC auf der Grundlage der Bestimmung, dass das CPAC-Auslösekriterium als auch das CHO-Auslösekriterium nicht erfüllt sind, sowie auf der Grundlage der Bestimmung, dass die CPAC-TTT für die Ziel-SCG läuft und die Funkverbindungsqualität der Ziel-MCG über dem vordefinierten Schwellenwert liegt.

5. Verfahren nach Anspruch 1, ferner umfassend:
Bestimmen, dass sowohl das CPAC-Auslösekriterium als auch das CHO-Auslösekriterium nicht erfüllt ist;
Bestimmen, dass eine CHO-TTT für die Ziel-MCG läuft und die Funkverbindungsqualität der Ziel-SCG über dem vordefinierten Schwellenwert liegt; und
beim Warten auf das Eintreten des ersten Ereignisses: gleichzeitiges Ausführen von CHO und CPAC auf der Grundlage der Bestimmung, dass das CPAC-Auslösekriterium als auch das CHO-Auslösekriterium nicht erfüllt sind, sowie auf der Grundlage der Bestimmung, dass die CHO-TTT für die Ziel-SCG läuft und die Funkverbindungsqualität der Ziel-MCG über dem vordefinierten Schwellenwert liegt.

6. Verfahren nach Anspruch 1, ferner umfassend:
Bestimmen, dass sowohl das CPAC-Auslösekriterium als auch das CHO-Auslösekriterium nicht erfüllt ist;
Bestimmen, dass eine CHO-TTT für die Ziel-MCG läuft und die CPAC-TTT für die Ziel-SCG läuft; und
beim Warten auf das Eintreten des ersten Ereignisses: gleichzeitiges Ausführen von CHO und CPAC auf der Grundlage der Bestimmung, dass das CPAC-Auslösekriterium und das CHO-Auslösekriterium nicht erfüllt sind, sowie auf der Grundlage der Bestimmung, dass die CHO-TTT für die Ziel-MCG läuft und die CPAC-TTT für die Ziel-SCG läuft.

7. Verfahren nach Anspruch 1, ferner umfassend:
Bestimmen, dass sowohl das CPAC-Auslösekriterium als auch das CHO-Auslösekriterium nicht erfüllt ist;
Bestimmen, dass die Qualität der Funkverbindung sowohl für die Ziel-MCG als auch für die Ziel-SCG über dem vordefinierten Schwellenwert liegt; und
beim Warten auf das Eintreten des ersten Ereignisses: gleichzeitiges Ausführen von CHO und CPAC auf der Grundlage der Bestimmung, dass das CPAC-Auslösekriterium und das CHO-Auslösekriterium nicht erfüllt sind, sowie auf der Grundlage der Bestimmung, dass die Qualität der Funkverbindung sowohl für die Ziel-MCG als auch für die Ziel-SCG über dem vordefinierten Schwellenwert liegt.

8. Verfahren nach Anspruch 1, wobei das Verfahren ferner umfasst, auf der Grundlage der Bestimmung, dass sowohl das CPAC-Auslösekriterium als auch das CHO-Auslösekriterium nicht erfüllt ist:
Bestimmen einer Auslösung einer Prozedur zur Funk-Wiederherstellung, RRE;
Bestimmen, dass die Funkverbindungsqualität mindestens einer CHO-Kandidatenzelle aus einer Vielzahl von CHO-Kandidatenzellen oder mindestens einer CPAC-Kandidatenzelle aus einer Vielzahl von CPAC-Kandidatenzellen über dem vordefinierten Schwellenwert liegt;
Vermeiden einer Zellenauswahl für die RRE-Prozedur; und
auf einer Bestimmung, dass die Funkverbindungsqualität über dem vordefinierten Schwellenwert liegt, beruhendes Übertragen einer Wiederherstellungsanforderung der Funkressourcensteuerung, RRC, zu der mindestens einen CHO-Kandidatenzelle oder der mindestens einen CPAC-Kandidatenzelle.

9. Verfahren nach Anspruch 8, wobei auf der Grundlage der Bestimmung, dass eine Funkverbindungsqualität keiner der Vielzahl von CHO-Kandidatenzellen und keiner der Vielzahl von CPAC-Kandidatenzellen über dem vordefinierten Schwellenwert liegt, das Verfahren ferner umfasst:
Herabsetzen der Priorität der Vielzahl von CHO-Kandidatenzellen und der Vielzahl von CPAC-Kandidatenzellen für die Zellenauswahl für die RRE-Prozedur.

10. Verfahren nach einem vorstehenden Anspruch, ferner umfassend:
Ermitteln des zweiten Ereignisses, dass eine bedingte Neukonfigurierung für die eigenständige CHO-Ausführung empfangen wird und ein Auslösekriterium für die eigenständige CHO erfüllt ist;
Bestimmen, ob eine Funkverbindungsqualität einer Quellzelle über einem vordefinierten Schwellenwert liegt;
Warten auf die gleichzeitige Ausführung von CHO und CPAC, bis die Funkverbindungsqualität der Quellzelle über dem vordefinierten Schwellenwert liegt;
Priorisieren der gleichzeitigen Ausführung von CHO und CPAC gegenüber der Ausführung der eigenständigen CHO auf der Grundlage der Bestimmung, dass die Funkverbindungsqualität der Quellzelle über dem vordefinierten Schwellenwert liegt; und
Anwenden der bedingten Neukonfigurierung für die gleichzeitige Ausführung von CHO und CPAC auf der Grundlage der Priorisierung.

11. Verfahren nach Anspruch 10, ferner umfassend:
beim Warten auf die gleichzeitige Ausführung von CHO und CPAC: Bestimmen, dass die Funkverbindungsqualität der Quellzelle unter dem vordefinierten Schwellenwert liegt; und
Ausführen der eigenständigen CHO durch Anwenden der bedingten Neukonfigurierung für die eigenständige CHO-Ausführung.

12. Benutzerendgerät (UE; 101) zum Durchführen der bedingten Verbindungsübergabe, CHO, in einem Szenario mit zweifacher Konnektivität, wobei die UE (101) umfasst:
mindestens einen Speicher (1105), der einen oder mehrere Computercodes speichert; und
mindestens einen Prozessor (1101), der mit dem mindestens einen Speicher (1105) betrieblich verbunden und dafür konfiguriert ist, den einen oder die mehrere Computercodes auszuführen, um:
eine Nachricht zur bedingten Neukonfigurierung für die gleichzeitige Ausführung von CHO und bedingter Hinzufügung und Änderung von Primär- und Sekundärzellen, CPAC, zu empfangen (201);
ein Auftreten eines ersten Ereignisses, das jedes von einem CHO-Auslösekriterium und einem CPAC-Auslösekriterium erfüllt, für die gleichzeitige Ausführung von CHO und CPAC zu überwachen (203);
das zweite Ereignis zu ermitteln, das einer Deklaration über von mindestens einem von Folgendem entspricht: Ausfall einer Funkverbindung, RLF, Ausfall einer Master-Zellengruppe, MCG, oder Ausfall einer sekundären Zellengruppe, SCG, (205); und
vor dem Eintreten des ersten Ereignisses und nach der Ermittlung des zweiten Ereignisses die CHO und die CPAC gleichzeitig auszuführen, und zwar auf der Grundlage von mindestens einem von Folgendem: eine Funkverbindungsqualität von jeder einer Ziel-MCG und einer Ziel-SCG und ein Status einer Auslösezeit, TTT, für jede der Ziel-MCG und die Ziel-SCG (207).

13. UE nach Anspruch 12, wobei der mindestens eine Prozessor ferner dafür konfiguriert ist, den einen oder die mehrere Computercodes auszuführen, um:
zu bestimmen, dass das CHO-Auslösekriterium für die Ziel-MCG erfüllt ist;
für die Ziel-SCG mindestens eines von Folgendem zu bestimmen:
dass eine CPAC-TTT läuft, und
dass eine Qualität der Funkverbindung der Ziel-SCG über einem vordefinierten Schwellenwert liegt; und
beim Warten auf das Eintreten des ersten Ereignisses CHO und CPAC gleichzeitig auszuführen, und zwar auf der Grundlage der Bestimmung, dass das CHO-Auslösekriterium für die Ziel-MCG erfüllt ist, sowie auf der Grundlage der Bestimmung des mindestens einen von Folgendem:
dass die CPAC-TTT der Ziel-SCG läuft, und
dass die Qualität der Funkverbindung der Ziel-SCG über dem vordefinierten Schwellenwert liegt.

14. UE nach Anspruch 12, wobei der mindestens eine Prozessor ferner dafür konfiguriert ist, den einen oder die mehrere Computercodes auszuführen, um:
zu bestimmen, dass das CPAC-Auslösekriterium für die Ziel-SCG erfüllt ist;
für die Ziel-MCG mindestens eines von Folgendem zu bestimmen:
dass eine CHO-TTT für die Ziel-MCG läuft, und
dass eine Qualität der Funkverbindung für die Ziel-MCG über einem vordefinierten Schwellenwert liegt; und
beim Warten auf das Eintreten des ersten Ereignisses CHO und CPAC gleichzeitig auszuführen, und zwar auf der Grundlage der Bestimmung, dass das CPAC-Auslösekriterium für die Ziel-SCG erfüllt ist, sowie auf der Grundlage der Bestimmung von mindestens einem von Folgendem:
dass die CHO-TTT für die Ziel-MCG läuft, und
dass die Qualität der Funkverbindung für die Ziel-MCG über dem vordefinierten Schwellenwert liegt.

15. UE nach Anspruch 12, wobei der mindestens eine Prozessor ferner dafür konfiguriert ist, den einen oder die mehrere Computercodes auszuführen, um:
zu bestimmen, dass sowohl das CPAC-Auslösekriterium als auch das CHO-Auslösekriterium nicht erfüllt ist;
zu bestimmen, dass eine CPAC-TTT für die Ziel-SCG läuft und eine Funkverbindungsqualität der Ziel-MCG über dem vordefinierten Schwellenwert liegt, und
beim Warten auf das Eintreten des ersten Ereignisses CHO und CPAC gleichzeitig auszuführen, und zwar auf der Grundlage der Bestimmung, dass das CPAC-Auslösekriterium und das CHO-Auslösekriterium nicht erfüllt sind, sowie auf der Grundlage der Bestimmung, dass die CPAC-TTT für die Ziel-SCG läuft und die Funkverbindungsqualität der Ziel-MCG über dem vordefinierten Schwellenwert liegt.

## Revendications

1. Procédé destiné au transfert conditionnel, CHO, dans un scénario de double connectivité dans un équipement utilisateur, UE (101), le procédé (200) comprenant :
la réception d'un message de reconfiguration conditionnelle pour l'exécution simultanée d'un CHO et d'ajout et de modification conditionnels de cellules primaires et secondaires, CPAC (201) ;
la surveillance d'une occurrence d'un premier événement qui satisfait chacun de critères de déclenchement de CHO et de critères de déclenchement de CPAC pour l'exécution simultanée du CHO et du CPAC (203) ;
la détection d'un second événement correspondant à une déclaration d'au moins une d'une défaillance de liaison radio, RLF, d'une défaillance de groupe de cellules maîtres, MCG, et d'une défaillance de groupe de cellules secondaires, SCG, (205) ; et
avant la survenue du premier événement et après la détection du second événement, l'exécution simultanée du CHO et du CPAC, sur la base d'au moins l'un d'une qualité de liaison radio de chacun d'un MCG cible et d'un SCG cible et d'un état d'un temps de déclenchement, TTT, pour chacun du MCG cible et du SCG cible (207).

2. Procédé selon la revendication 1, comprenant en outre :
la détermination que les critères de déclenchement de CHO pour le MCG cible sont satisfaits ;
la détermination, pour le SCG cible, d'au moins un des éléments suivants :
qu'un TTT de CPAC est en cours d'exécution, et
qu'une qualité de la liaison radio du SCG cible est supérieure à une valeur seuil prédéfinie ; et
en attendant la survenue du premier événement, l'exécution simultanée du CHO et du CPAC, sur la base de la détermination que les critères de déclenchement de CHO pour le MCG cible sont satisfaits et sur la base de la détermination de l'au moins un des éléments suivants :
que le TTT de CPAC du SCG cible est en cours d'exécution, et
que la qualité de la liaison radio du SCG cible est supérieure à la valeur seuil prédéfinie.

3. Procédé selon la revendication 1, comprenant en outre :
la détermination que des critères de déclenchement de CPAC pour le SCG cible sont satisfaits ;
la détermination, pour le MCG cible, d'au moins un des éléments suivants :
qu'un TTT de CHO est en cours d'exécution pour le MCG cible, et
qu'une qualité de la liaison radio pour le MCG cible est supérieure à une valeur seuil prédéfinie ; et
en attendant la survenue du premier événement, l'exécution simultanée du CHO et du CPAC, sur la base de la détermination que les critères de déclenchement de CPAC sont satisfaits pour le SCG cible et sur la base de la détermination d'au moins un des éléments suivants
que le TTT de CHO est en cours d'exécution pour le MCG cible, et
que la qualité de la liaison radio pour le MCG cible est supérieure à la valeur seuil prédéfinie.

4. Procédé selon la revendication 1, comprenant en outre :
la détermination que les critères de déclenchement de CPAC et les critères de déclenchement de CHO ne sont pas satisfaits ;
la détermination qu'un TTT de CPAC est en cours d'exécution pour le SCG cible et qu'une qualité de liaison radio du MCG cible est supérieure à la valeur seuil prédéfinie, et
en attendant la survenue du premier événement, l'exécution simultanée du CHO et du CPAC sur la base de la détermination que les critères de déclenchement de CPAC et les critères de déclenchement de CHO ne sont pas satisfaits et sur la base de la détermination que le TTT de CPAC est en cours d'exécution pour le SCG cible et que la qualité de liaison radio du MCG cible est supérieure à la valeur seuil prédéfinie.

5. Procédé selon la revendication 1, comprenant en outre :
la détermination que les critères de déclenchement de CPAC et les critères de déclenchement de CHO ne sont pas satisfaits ;
la détermination qu'un TTT de CHO est en cours d'exécution pour le MCG cible et qu'une qualité de liaison radio du SCG cible est supérieure à la valeur seuil prédéfinie ; et
en attendant la survenue du premier événement, l'exécution simultanée du CHO et du CPAC, sur la base de la détermination que les critères de déclenchement de CPAC et les critères de déclenchement de CHO ne sont pas satisfaits et sur la base de la détermination que le TTT de CHO est en cours d'exécution pour le MCG cible et que la qualité de liaison radio du SCG cible est supérieure à la valeur seuil prédéfinie.

6. Procédé selon la revendication 1, comprenant en outre :
la détermination que les critères de déclenchement de CPAC et les critères de déclenchement de CHO ne sont pas satisfaits ;
la détermination qu'un TTT de CHO est en cours d'exécution pour le MCG cible et que le TTT de CPAC est en cours d'exécution pour le SCG cible ; et
en attendant la survenue du premier événement, l'exécution simultanée du CHO et du CPAC sur la base de la détermination que les critères de déclenchement de CPAC et les critères de déclenchement de CHO ne sont pas satisfaits et sur la base de la détermination que le TTT de CHO est en cours d'exécution pour le MCG cible et que le TTT de CPAC est en cours d'exécution pour le SCG cible.

7. Procédé selon la revendication 1, comprenant en outre :
la détermination que les critères de déclenchement de CPAC et les critères de déclenchement de CHO ne sont pas satisfaits ;
la détermination qu'une qualité de la liaison radio est supérieure à la valeur seuil prédéfinie pour le MCG cible et le SCG cible ; et
en attendant la survenue du premier événement, l'exécution simultanée du CHO et du CPAC sur la base de la détermination des critères de déclenchement de CPAC et des critères de déclenchement de CHO et sur la base de la détermination que la qualité de la liaison radio est supérieure à la valeur seuil prédéfinie pour le MCG cible et le SCG cible.

8. Procédé selon la revendication 1, dans lequel le procédé comprend en outre, sur la base de la détermination que les critères de déclenchement de CPAC et les critères de déclenchement de CHO ne sont pas satisfaits :
la détermination d'un déclenchement d'une procédure de rétablissement radio, RRE ;
la détermination qu'une qualité de liaison radio d'au moins une cellule candidate CHO parmi une pluralité de cellules candidates CHO ou d'au moins une cellule candidate CPAC parmi une pluralité de cellules candidates CPAC est supérieure à la valeur seuil prédéfinie ;
l'évitement d'une sélection de cellule pour la procédure RRE ; et
sur la base d'une détermination que la qualité de liaison radio est supérieure à la valeur seuil prédéfinie, la transmission d'une demande de rétablissement de contrôle de ressources radio, RRC, à l'au moins une cellule candidate CHO ou à l'au moins une cellule candidate CPAC.

9. Procédé selon la revendication 8, dans lequel, sur la base de la détermination qu'une qualité de liaison radio d'aucune de la pluralité de cellules candidates CHO et d'aucune de la pluralité de cellules candidates CPAC n'est supérieure à la valeur seuil prédéfinie, le procédé comprend en outre la dépriorisation de la pluralité de cellules candidates CHO et de la pluralité de cellules candidates CPAC pour la sélection de cellules pour la procédure RRE.

10. Procédé selon une quelconque revendication précédente, comprenant en outre ;
la détection du second événement selon lequel une reconfiguration conditionnelle pour une exécution autonome de CHO est reçue et des critères de déclenchement autonomes de CHO sont satisfaits ;
le fait de déterminer si une qualité de liaison radio d'une cellule source est supérieure à une valeur seuil prédéfinie ;
le fait d'attendre l'exécution simultanée du CHO et du CPAC jusqu'à ce que la qualité de liaison radio de la cellule source soit supérieure à la valeur seuil prédéfinie ;
le fait de privilégier l'exécution simultanée du CHO et du CPAC par rapport à l'exécution du CHO autonome, sur la base de la détermination que la qualité de liaison radio de la cellule source est supérieure à la valeur seuil prédéfinie ; et
l'application de la reconfiguration conditionnelle pour l'exécution simultanée du CHO et du CPAC sur la base de la priorisation.

11. Procédé selon la revendication 10, comprenant en outre :
en attendant l'exécution simultanée du CHO et du CPAC, la détermination que la qualité de liaison radio de la cellule source est inférieure à la valeur seuil prédéfinie ; et
l'exécution du CHO autonome en appliquant la reconfiguration conditionnelle pour l'exécution de CHO autonome.

12. Équipement utilisateur, UE (101), pour effectuer un transfert conditionnel, CHO, dans un scénario de double connectivité, l'UE (101) comprenant :
au moins une mémoire (1105) stockant un ou plusieurs codes informatiques ; et
au moins un processeur (1101) connecté fonctionnellement à l'au moins une mémoire (1105) et configuré pour exécuter les un ou plusieurs codes informatiques pour :
recevoir un message de reconfiguration conditionnelle pour l'exécution simultanée d'un CHO et l'ajout et le changement conditionnels de cellules primaires et secondaires, CPAC (201) ;
surveiller une occurrence d'un premier événement qui satisfait chacun des critères de déclenchement de CHO et des critères de déclenchement de CPAC pour l'exécution simultanée de CHO et CPAC (203) ;
détecter le second événement correspondant à une déclaration d'au moins une d'une défaillance de liaison radio, RLF, d'une défaillance de groupe de cellules maîtres, MCG, et d'une défaillance de groupe de cellules secondaires (SCG) (205) ; et
avant la survenue du premier événement et après la détection du second événement, exécuter simultanément le CHO et le CPAC, sur la base d'au moins l'un d'une qualité de liaison radio de chacun d'un MCG cible et d'un SCG cible, d'un état d'un temps de déclenchement, TTT, pour chacun du MCG cible et du SCG cible (207).

13. UE selon la revendication 12, dans lequel l'au moins un processeur est en outre configuré pour exécuter les un ou plusieurs codes informatiques pour :
déterminer que les critères de déclenchement de CHO pour le MCG cible sont satisfaits ;
déterminer pour le SCG cible, au moins l'un des éléments suivants :
qu'un TTT de CPAC est en cours d'exécution, et
qu'une qualité de la liaison radio du SCG cible est supérieure à une valeur seuil prédéfinie ; et
en attendant la survenue du premier événement, exécuter simultanément le CHO et le CPAC, sur la base de la détermination que les critères de déclenchement de CHO pour le MCG cible sont satisfaits et sur la base de la détermination d'au moins l'un des éléments suivants :
que le TTT de CPAC du SCG cible est en cours d'exécution, et
que la qualité de la liaison radio du SCG cible est supérieure à la valeur seuil prédéfinie.

14. UE selon la revendication 12, dans lequel l'au moins un processeur est en outre configuré pour exécuter les un ou plusieurs codes informatiques pour :
déterminer que des critères de déclenchement de CPAC pour le SCG cible sont satisfaits ;
déterminer, pour le MCG cible, au moins l'un des éléments suivants :
qu'un TTT de CHO est en cours d'exécution pour le MCG cible, et
qu'une qualité de la liaison radio pour le MCG cible est supérieure à une valeur seuil prédéfinie ; et
en attendant la survenue du premier événement, exécuter simultanément le CHO et le CPAC, sur la base de la détermination que les critères de déclenchement de CPAC pour le SCG cible et sur la base de la détermination d'au moins l'un des éléments suivants :
que le TTT de CHO est en cours d'exécution pour le MCG cible, et
que la qualité de la liaison radio pour le MCG cible est supérieure à la valeur seuil prédéfinie.

15. UE selon la revendication 12, dans lequel l'au moins un processeur est en outre configuré pour exécuter les un ou plusieurs codes informatiques pour :
déterminer que les critères de déclenchement de CPAC et les critères de déclenchement de CHO ne sont pas satisfaits ;
déterminer qu'un TTT de CPAC est en cours d'exécution pour le SCG cible et qu'une qualité de liaison radio du MCG cible est supérieure à la valeur seuil prédéfinie, et
en attendant la survenue du premier événement, exécuter simultanément le CHO et le CPAC, sur la base de la détermination que les critères de déclenchement de CPAC et les critères de déclenchement de CHO ne sont pas satisfaits et sur la base de la détermination que le TTT de CPAC est en cours d'exécution pour le SCG cible et que la qualité de liaison radio du MCG cible est supérieure à la valeur seuil prédéfinie.
